# EUROPEAN PATENT APPLICATION

(11) **EP 1 892 486 A1**
(43) Date of publication of application: **27.02.2008**
(21) Application number: 06747004.7
(22) Date of filing: 30.05.2006
(51) Int. Cl.: F25B 29/00, F25B 47/02

(54) **REFRIGERATION DEVICE**

(30) Priority: 15.06.2005 JP 2005175511; 25.01.2006 JP 2006016543
(71) Applicant: DAIKIN INDUSTRIES, LTD., Osaka-shi, Osaka 530-8323 (JP)
(72) Inventor: TAKEGAMI, Masaaki DAIKIN INDUSTRIES, LTD., Kita-ku, Sakai-shi, Osaka 5918511 (JP); UENO, Takeo DAIKIN INDUSTRIES, LTD., Kita-ku, Sakai-shi, Osaka 5918511 (JP); KONDO, Azuma DAIKIN INDUSTRIES, LTD., Kita-ku, Sakai-shi, Osaka 5918511 (JP); TANIMOTO, Kenji DAIKIN INDUSTRIES, LTD., Kita-ku, Sakai-shi, Osaka 5918511 (JP); ODA, Yoshinari DAIKIN INDUSTRIES, LTD., Kita-ku, Sakai-shi, Osaka 5918511 (JP); NOMURA, Kazuyoshi DAIKIN INDUSTRIES, LDT., Kita-ku, Sakai-shi, Osaka 5918511 (JP); NAKAJIMA, Hiroto DAIKIN INDUSTRIES, LTD., Kita-ku, Sakai-shi, Osaka 5918511 (JP)
(74) Representative: HOFFMANN EITLE
(86) International application number: PCT/JP2006/310776
(87) International publication number: WO 2006/134771

(57) **Abstract**

In a refrigeration system having a refrigerant circuit **(20)** that is constructed in such a way that a plurality of lines of refrigeration circuits **(70, 80)** having refrigeration heat exchangers **(72, 84)** respectively are connected to an outdoor circuit **(30)** provided with an outdoor heat exchanger **(32)** and a compression mechanism **(31)** and conducts a vapor compression type refrigeration cycle, at least one of the lines of refrigeration circuits **(80)** having an auxiliary compressor **(85)** connected in series to the refrigeration heat exchanger **(84),** in order to respond to a variety of patterns of defrosting operations without providing a defrosting mechanism other than the refrigerant circuit **(20),** there is provided a hot gas introduction passage **(46, 89)** for selectively introducing gas refrigerant discharged from the compression mechanism **(31)** of the outdoor circuit **(30)** into at least one of the plurality of refrigeration heat exchangers **(72, 84)** and a defrosting operation of conducting a refrigeration cycle by using the refrigeration heat exchanger **(72, 84)** as a condenser can be performed.

## Description

### TECHNICAL FIELD

The present invention relates to a refrigeration system having a refrigerant circuit of a vapor compression type refrigeration cycle such that plural lines of refrigeration circuits each having a refrigeration heat exchanger are connected in parallel to an outdoor circuit provided with an outdoor heat exchanger and a compression mechanism, and in particular, to a refrigeration system such that at least one line of refrigeration circuit has an auxiliary compressor connected in series to a refrigeration heat exchanger.

### BACKGROUND ART

A refrigeration system for conducting a refrigeration cycle has been known and has been widely used as a refrigeration unit of a chiller unit or a freezer unit (or a chiller showcase or a freezer showcase) for storing foods and the like. For example, patent document 1 discloses a refrigeration system provided with plural heat exchangers for refrigerating the interior of a chiller unit or the like. In this refrigeration system, a chiller heat exchanger for chilling the interior of a chiller showcase of a chiller unit and a freezer heat exchanger for freezing the interior of a freezer showcase of a freezer unit are connected in parallel to one outdoor unit. Moreover, in this refrigeration system, an auxiliary compressor is interposed between the freezer heat exchanger and the outdoor unit in addition to a compression mechanism (main compressor) of the outdoor unit. In this refrigeration system, a single-stage refrigeration cycle, which uses the chiller heat exchanger as an evaporator, and a two-stage refrigeration cycle, which uses the freezer heat exchanger as an evaporator and uses the auxiliary compressor as a low-stage compressor, are conducted by one refrigerant circuit.

The refrigeration system of this kind presents a problem that when moisture in air adheres to a chiller heat exchanger or a freezer heat exchanger and freezes there, the refrigeration of air in the refrigerator is impaired by the adhering frost. For this reason, it is necessary to melt the frost adhering to these heat exchangers, that is, to defrost the refrigeration heat exchangers:

Here, in the refrigeration system disclosed in the patent document 1, the evaporation temperature of refrigerant in the freezer heat exchange is set comparatively low and hence the problem of the frost developed in the freezer heat exchanger becomes particularly serious. For this reason, the refrigeration system conducts a refrigeration cycle for circulating refrigerant through the auxiliary compressor, the freezer heat exchanger, an expansion valve for the chiller heat exchanger, and the chiller heat exchanger in this order to defrost the freezer heat exchanger.

To this end, the refrigerant circuit of the refrigeration system is provided with a switching mechanism capable of switching between a first operation for a cooling operation in which the auxiliary compressor sucks refrigerant from the freezer heat exchanger and discharges the refrigerant to the suction side of the compression mechanism of the outdoor unit and a second operation for a defrosting operation in which the auxiliary compressor sucks refrigerant from the chiller heat exchanger and discharges the refrigerant to the freezer heat exchanger.

During the defrosting operation for defrosting the freezer heat exchanger, the refrigerant circuit sends the refrigerant from the freezer heat exchanger to the chiller heat exchanger while performing the second operation. During the defrosting operation, the refrigerant absorbs heat from air in the chiller showcase by the chiller heat exchanger, thereby being evaporated, and is sucked by the auxiliary compressor and is compressed by the auxiliary compressor and is sent to the freezer heat exchanger. The refrigerant dissipates heat in the freezer heat exchanger, thereby being condensed, and the heat melts the frost. The condensed refrigerant is expanded by an expansion valve before the chiller heat exchanger and then is returned to the chiller heat exchanger and absorbs heat from the air in the chiller showcase, thereby being evaporated. In this manner, in the refrigeration system, the freezer heat exchanger is defrosted by the use of heat that the refrigerant recovers from the air in the chiller showcase when the refrigerant flows through the auxiliary compressor, the freezer heat exchanger, the expansion valve, and the chiller heat exchanger in this order.
[Patent document 1] Japanese Unexamined Patent Publication No. 2004-353995

However, in the refrigeration system, when there arises a problem that moisture in air adheres to a chiller heat exchanger and freezes there to develop frost, whereby the refrigeration of air in the refrigerator is impaired, it is impossible to defrost the chiller heat exchanger by the heat of the refrigerant. Thus, to defrost the chiller heat exchanger, the refrigeration system needs to be provided with a defrosting mechanism such as an electric heater in addition to the refrigerant circuit, which presents a problem that the construction of the refrigeration system becomes complex.

Moreover, in the above-mentioned refrigeration system, the freezer heat exchanger is defrosted by using the chiller heat exchanger as a heat source, so it is necessary to bring the chiller heat exchanger and the freezer heat exchanger into a good balance between heat absorption and heat dissipation at the time of the defrosting operation. There is presented also a problem that this imposes a restriction on design.

The present invention has been made in view of these problems. The object of the present invention is to provide a refrigeration system capable of responding to a variety of patterns of defrosting operations without providing a defrosting mechanism except for a refrigerant circuit and of preventing the action of defrosting a refrigeration heat exchanger such as a chiller heat exchanger and a freezer heat exchanger from imposing a restriction on the design of these heat exchangers.

### DISCLOSURE OF THE INVENTION

A first aspect of the invention is predicated on a refrigeration system having a refrigerant circuit **20** that is constructed in such a way that a plurality of lines of refrigeration circuits **70, 80** having refrigeration heat exchangers **72, 84** respectively are connected to an outdoor circuit **30** provided with an outdoor heat exchanger **32** and a compression mechanism **31** and conducts a vapor compression type refrigeration cycle, at least one of the lines of refrigeration circuits **80** having an auxiliary compressor **85** connected in series to the refrigeration heat exchanger **84.**

This refrigeration system is characterized by including: a hot gas introduction passage **46, 89, 100, 102** for selectively introducing gas refrigerant discharged from the compression mechanism **31** of the outdoor circuit **30** into at least one of the plurality of refrigeration heat exchangers **72, 84;** and a defrosting path **25** capable of performing a defrosting operation of conducting a refrigeration cycle by using that refrigeration heat exchanger **72, 84** as a condenser.

In this first aspect of the invention, at the time of the defrosting operation, high-temperature refrigerant discharged from the compression mechanism **31** of the outdoor circuit **30** is introduced into at least one of the plurality of refrigeration heat exchangers **72, 84** via the hot gas introduction passage **46, 89, 100, 102** and the operation of a refrigeration cycle using that refrigeration heat exchanger **72, 84** as a condenser is performed. Thus, frost adhering to that refrigeration heat exchanger **72, 84** is melted by heat absorbed by the heat exchanger used as an evaporator at that time and by heat produced by compressing the refrigerant in the compression mechanism **31.** This defrosting operation can be performed by selecting the refrigeration heat exchanger **72, 84** because the hot gas introduction passage **46, 89, 100, 102** is provided.

A second aspect of the invention is characterized in that in the first aspect of the invention, the outdoor circuit **30** has a first refrigeration circuit **70** and a second refrigeration circuit **80** connected thereto in parallel, the first refrigeration circuit **70** having a first refrigeration heat exchanger **72,** the second refrigeration circuit **80** having a second refrigeration heat exchanger **84** and the auxiliary compressor **85.** The first refrigeration circuit **70** can be made a chiller circuit for chilling a chiller or a chiller showcase. The second refrigeration circuit **80** can be made a freezer circuit for freezing a freezer or a freezer showcase, for example.

In this second aspect of the invention, in the refrigeration system provided with the first refrigeration heat exchanger **72** and the second refrigeration heat exchanger **84,** by using the hot gas introduction passage **46, 89,** the defrosting operation can be performed by a refrigeration cycle using at least one of the first refrigeration heat exchanger **72** and the second refrigeration heat exchanger **84** as a condenser. For example, the operation of defrosting only one of the first refrigeration heat exchanger **72** and the second refrigeration heat exchanger **84** can be performed or the operation of defrosting both of the first refrigeration heat exchanger **72** and the second refrigeration heat exchanger **84** at the same time can be performed.

A third aspect of the invention is characterized in that in the first aspect of the invention, the outdoor circuit **30** has a plurality of refrigeration circuits **80** connected thereto in parallel, each of the plurality of refrigeration circuits **80** having the refrigeration heat exchanger **84** and the auxiliary compressor **85.** This refrigeration circuit can be made a freezer circuit for freezing a freezer or a freezer showcase, for example.

In this third aspect of the invention, in the refrigeration system provided with a plurality of refrigeration heat exchangers **84,** by using the hot gas introduction passage **46, 89,** the defrosting operation can be performed by a refrigeration cycle using at least one of the plural refrigeration heat exchangers **84** as a condenser. For example, when there are provided two refrigeration heat exchangers **84,** the operation of defrosting only one of the refrigeration heat exchangers **84** can be performed or the operation of defrosting both of the refrigeration heat exchangers **84** at the same time can be performed.

A fourth aspect of the invention is characterized in: that in any one of the first aspect of the invention to the third aspect of the invention, the outdoor circuit **30** has an air heat exchanger circuit (e.g., air-conditioning circuit) **60** connected thereto, the air heat exchanger circuit **60** having an air heat exchanger (e.g., air-conditioning heat exchanger) **62** for adjusting temperature of air; and that a first defrosting operation and a second defrosting operation can be performed, the first defrosting operation using the refrigeration heat exchangers **72, 84** as condensers and using the air heat exchanger **62** as an evaporator, the second defrosting operation using the refrigeration heat exchangers **72, 84** as condensers and using the outdoor heat exchanger **32** as an evaporator.

In this fourth aspect of the invention, in the refrigeration system provided with the plurality of refrigeration heat exchangers **72, 84** and the air heat exchanger **62,** by using the hot gas introduction passage **46, 89,** a defrosting operation can be performed by a refrigeration cycle using at least one of the plural refrigeration heat exchangers **72, 84** as a condenser. Specifically, the first defrosting operation using at least one of the plural refrigeration heat exchangers **72, 84** as a condenser and using the air heat exchanger **62** as an evaporator and the second defrosting operation using at least one of the refrigeration heat exchangers **72, 84** as a condenser and using the outdoor heat exchanger **32** as an evaporator can be performed.

A fifth aspect of the invention is characterized in that in any one of the first aspect of the invention to the fourth aspect of the invention, the hot gas introduction passage **46, 89 has** a high stage side hot gas passage **46** and a low stage hot gas passage **89,** the high stage side hot gas passage **46** being connected to a discharge line **45** of the compression mechanism **31** of the outdoor circuit **30** and to a base pipe **42** of a low-pressure gas line of the respective refrigeration circuits **70, 80** and allowing a refrigerant flow to the respective refrigeration heat exchangers **72, 84** from the discharge line **45** of the compression mechanism **31** at the time of a defrosting operation, the low stage side hot gas passage **89** being connected to a discharge line **22b** and a suction line **88** of the auxiliary compressor **85** and allowing a refrigerant flow to the refrigeration heat exchanger **84** connected to the auxiliary compressor **85** from the discharge line **22b** of the auxiliary compressor **85** at the time of the defrosting operation.

In this fifth aspect of the invention, at the time of the defrosting operation, gas refrigerant discharged from the compression mechanism **31** of the outdoor circuit **30,** first, flows through the base pipe **42** of the low-pressure gas line of the respective refrigeration circuits **70, 80** from high stage side hot gas passage **46** to the respective refrigeration heat exchangers **72, 84.** Then, for example, in a first refrigeration circuit (for example, chiller circuit) **70** not provided with the auxiliary compressor **85,** the discharged gas refrigerant flows into a first refrigeration heat exchanger (for example, chiller heat exchanger) **72** and the refrigeration heat exchanger **72** functions as a condenser. Moreover, in a second refrigeration circuit (for example, freezer circuit) **80** provided with the auxiliary compressor **85,** the discharged gas refrigerant flows through the low stage side hot gas passage **89** and flows into a second refrigeration heat exchanger (for example, freezer heat exchanger) **84** and the refrigeration heat exchanger **84** functions as a condenser.

Then, by selectively introducing the discharged gas refrigerant into the respective refrigeration heat exchangers **72, 84,** frost adhering to at least one of the refrigeration heat exchangers **72, 84** is melted. For example, in the construction of the second aspect of the invention, the operation of defrosting only one of the first refrigeration heat exchanger **72** and the second refrigeration heat exchanger **84** can be performed or the operation of defrosting both of the first refrigeration heat exchanger **72** and the second refrigeration heat exchanger **84** at the same time can be performed. When two refrigeration heat exchangers **84** are provided in the construction of the third aspect of the invention, the operation of defrosting only one of the refrigeration heat exchangers **84** can be performed or the operation of defrosting both of the refrigeration heat exchangers **84** at the same time can be performed. At this time, in the refrigeration heat exchanger **84** having the auxiliary heat exchanger **85** connected thereto, by stopping introducing the discharged gas refrigerant through the low stage side hot gas passage **89,** there can be brought about a state in which the defrosting operation is not performed.

A sixth aspect of the invention is characterized in: that in the fifth aspect of the invention, the compression mechanism **31** of the outdoor circuit **30** includes: a first compressor **31a,** a second compressor **31b,** and a third compressor **31c,** which are connected in parallel; a four-way switching valve **37** connected to an suction side of the compression mechanism **31;** a high stage side opening/opening valve **SV1** disposed in the high stage side hot gas passage **46;** and a low stage side opening/opening valve **SV2** disposed in the low stage side hot gas passage **89,** the first compressor **31a** having its suction pipe **41a** connected to a first port **P1** of the four-way switching valve **37** via a check valve **CV1** for prohibiting a refrigerant flow to the first compressor **31a,** the second compressor **31b** having its suction pipe **41b** connected to a second port **P2** of the four-way switching valve **37,** the third compressor **31c** having its suction pipe **41c** connected to a third port **P3** of the four-way switching valve **37** via a check valve **CV2** for prohibiting a refrigerant flow to the third compressor **31c,** the compression mechanism **31** having its high-pressure introduction pipe **47** communicating with a high pressure line connected to a fourth port **P4** of the four-way switching valve **37;** that the high stage side hot gas passage **46** is connected to the suction pipe **41a** of the first compressor **31a;** and that the four-way switching valve **37** is constructed so as to be able to switch between a first state in which the first port **P1** communicates with the second port **P2** and in which the third port **P3** communicates with the fourth port **P4** and a second state in which the first port **P1** communicates with the fourth port **P4** and in which the second port **P2** communicates with the third port **P3.**

In this sixth aspect of the invention, at the time of the defrosting operation, the four-way switching valve **37** is set to the second state and the high stage side opening/opening valve **SV1** and the low stage side opening/opening valve **SV2** are opened and two or one of the second compressor **31b** and the third compressor **31c** of the compression mechanism **31** is actuated. In this state, the gas refrigerant discharged from the compression mechanism **31** passes first from the high stage side hot gas passage **46** through the base pipe **42** of the low pressure line of the respective refrigeration circuits **70, 80** to the respective refrigeration heat exchangers **72, 84.** Next, for example, in the first refrigeration circuit (for example, chiller circuit) **70** not provided with the auxiliary compressor **85,** the discharged gas refrigerant flows into the first refrigeration heat exchangers (for example, chiller heat exchanger) **72** and the heat exchanger **72** functions as a condenser. Moreover, in the second refrigeration circuit (for example, freezer circuit) **80** provided with the auxiliary compressor **85,** the discharged gas refrigerant flows through the low stage side hot gas passage **89** and flows into the second refrigeration heat exchanger (for example, freezer heat exchanger) **84** and the heat exchanger **84** functions as a condenser.

By selectively introducing the discharged gas refrigerant into the respective refrigeration heat exchangers **72, 84,** frost adhering to at least one of the respective refrigeration heat exchangers **72, 84** is melted. For example, in the construction of the second aspect of the invention, the operation of defrosting only one of the first refrigeration heat exchanger **72** and the second refrigeration heat exchanger **84** can be performed or the operation of defrosting both of the first refrigeration heat exchanger **72** and the second refrigeration heat exchanger **84** at the time can be performed. When two refrigeration heat exchangers **84** are provided in the construction of the third aspect of the invention, the operation of defrosting only one of the first refrigeration heat exchangers **84** can be performed or the operation of defrosting both of the refrigeration heat exchangers **84** at the time can be performed. At that time, in the refrigeration heat exchanger **84** having the auxiliary compressor **85** connected thereto, by closing the low stage side opening/opening valve **SV2** to stop introducing the discharged gas refrigerant through the low stage side hot gas passage **89,** there can be brought about a state in which the defrosting operation is not performed. Moreover, the low-pressure gas refrigerant having finished an expansion process and an evaporation process after a condensation process in the refrigeration heat exchangers **72, 84** passes through the four-way switching valve **37,** the suction pipe **41b,** and the suction pipe **41c** and then is sucked by the second compressor **32b** and the third compressor **31c.**

A seventh aspect of the invention is characterized in: that in the fifth aspect of the invention, the compression mechanism **31** of the outdoor circuit **30** includes: a first compressor **31a,** a second compressor **31b,** and a third compressor **31c,** which are connected in parallel; a four-way switching valve **37** connected to a suction side of the compression mechanism **31;** and a low stage side opening/closing valve **SV2** disposed in the low stage side hot gas passage **89,** the first compressor **31a** having its suction pipe **41a** connected to a first port **P1** of the four-way switching valve **37,** the second compressor **31b** having its suction pipe **41b** connected to a second port **P2** of the four-way switching valve **37,** the third compressor **31c** having its suction pipe **41c** connected to a third port **P3** of the four-way switching valve **37** via a check valve **CV2** for prohibiting a refrigerant flow to the third compressor **31c;** that the high stage side hot gas passage **46** is connected to a fourth port **P4** of the four-way switching valve **37;** and that the four-way switching valve **37** is constructed so as to be able to switch between a first state in which the first port **P1** communicates with the fourth port **P4** and in which the second port **P2** communicates with the third port **P3** and a second state in which the first port **P1** communicates with the second port **P2** and in which the third port **P3** communicates with the fourth port **P4.**

In this seventh aspect of the invention, at the time of the defrosting operation, the four-way switching valve **37** is set to the second state and the low stage side opening/closing valve **SV2** is opened and two or one of the second compressor **31b** and the third compressor **31c** of the compression mechanism **31** is actuated. In this state, the gas refrigerant discharged from the compression mechanism **31** passes first from the high stage side hot gas passage **46** and the four-way switching valve **37** through the base pipe **42** of the low pressure line of the respective refrigeration circuits **70, 80** to the respective refrigeration heat exchangers **72, 84.** Next, for example, in the first refrigeration circuit (for example, chiller circuit) **70** not provided with the auxiliary compressor **85,** the discharged gas refrigerant flows into the first refrigeration heat exchanger (for example, chiller heat exchanger) **72** and the heat exchanger **72** functions as a condenser. Moreover, in the second refrigeration circuit (for example, freezer circuit) **80** provided with the auxiliary compressor **85,** the discharged gas refrigerant flows through the low stage side hot gas passage **89** and flows into the second refrigeration heat exchanger (for example, freezer heat exchanger) **84** and the heat exchanger **84** functions as a condenser.

By selectively introducing the discharged gas refrigerant into the respective refrigeration heat exchangers **72, 84,** frost adhering to at least one of the respective refrigeration heat exchangers **72, 84** is melted. For example, in the construction of the second aspect of the invention, the operation of defrosting only one of the first refrigeration heat exchanger **72** and the second refrigeration heat exchanger **84** can be performed or the operation of defrosting both of the first refrigeration heat exchanger **72** and the second refrigeration heat exchanger **84** at the same time can be performed. When two refrigeration heat exchangers **84** are provided in the construction of the third aspect of the invention, the operation of defrosting only one of the refrigeration heat exchangers **84** can be performed or the operation of defrosting both of the refrigeration heat exchangers **84** at the same time can be performed. At that time, in the refrigeration heat exchanger **84** having the auxiliary compressor **85** connected thereto, by closing the low stage side opening/closing valve **SV2** to stop introducing the discharged gas refrigerant through the low stage side hot gas passage **89,** there can be brought about a state in which the defrosting operation is not performed. Moreover, the low-pressure gas refrigerant having finished an expansion process and an evaporation process after a condensation process in the refrigeration heat exchangers **72, 84** passes through the four-way switching valve **37,** the suction pipe **41b,** and the suction pipe **41c** and then is sucked by the second compressor **32b** and the third compressor **31c.**

An eighth aspect of the invention is characterized in that in the first aspect of the invention, the hot gas passage **46, 89** includes a first introduction passage **96** and a second introduction passage **97,** the first introduction passage **96** introducing gas refrigerant discharged from the compression mechanism **31** of the outdoor circuit **30** into the auxiliary compressor **85,** the second introduction passage **97** introducing gas refrigerant discharged from the auxiliary compressor **85** into the refrigeration heat exchanger **84.**

In this eighth aspect of the invention, the gas refrigerant discharged from the compression mechanism **31** of the outdoor circuit **30** is introduced into the auxiliary compressor **85** via the first introduction passage **96** and is compressed by the auxiliary compressor **85** and then the gas refrigerant discharged from the auxiliary compressor **85** is introduced into the refrigeration heat exchanger **84** via the second introduction passage **97** and is used for defrosting the refrigeration heat exchanger **84.** As described above, at the time of defrosting operation of this eighth aspect of the invention, the refrigerant is compressed by both of the compression mechanism **31** of the outdoor circuit **30** and the auxiliary compressor **85,** so heat given to the refrigerant at the time of the defrosting operation can be increased.

A ninth aspect of the invention is characterized in: that in the eighth aspect of the invention, the second introduction passage **97** is connected to the compression mechanism **31** of the outdoor circuit **30** and to the refrigeration heat exchanger **84;** that the first introduction passage **96** is branched from the second introduction passage **97** and is connected to the auxiliary compressor **85** so as to introduce part of gas refrigerant discharged from the compression mechanism **31** of the outdoor circuit **30** into the auxiliary compressor **85;** and that the second introduction passage **97** has a discharge pipe **98** of the auxiliary compressor **85** connected to its portion closer to the compression mechanism **31** of the outdoor circuit **30.**

In this ninth aspect of the invention, part of the gas refrigerant discharged from the compression mechanism **31** of the outdoor circuit **30** is introduced into the auxiliary compressor **85** via the first introduction passage **96** and is further compressed by the auxiliary compressor **85.** Then, the gas refrigerant discharged from the auxiliary compressor **85** is merged with the gas refrigerant discharged from the compression mechanism **31** and flowing through the second introduction passage **97** and the refrigerant after merging is introduced into the refrigeration heat exchanger **84** and is used for defrosting the refrigeration heat exchanger **84.** As described above, at the time of the defrosting operation of this ninth aspect of the invention, in the nearly same manner in the eighth aspect of the invention, the refrigerant is compressed by both of the compression mechanism **31** of the outdoor circuit **30** and the auxiliary compressor **85,** so heat given to the refrigerant at the time of the defrosting operation can be increased.

A tenth aspect of the invention is characterized in that the ninth aspect of the invention, there is provided a liquid injection passage **99** for introducing part of liquid refrigerant flowing out of the refrigeration heat exchanger **84** into the auxiliary compressor **85.**

In this tenth aspect of the invention is performed a liquid injecting operation for supplying the auxiliary compressor **85** with part of the refrigerant condensed by the refrigeration heat exchanger **84** and brought into a liquid state in the ninth aspect of the invention. As a result, the refrigerant sucked by the auxiliary compressor **85** is refrigerated. For this reason, it is possible to prevent the temperature of the gas refrigerant discharged from the auxiliary compressor **85** from being increased excessively as compared with a case where the liquid injecting operation is not performed.

An eleventh aspect of the invention is characterized in that in the ninth aspect of the invention, the auxiliary compressor **85** is constructed of a variable displacement compressor.

When the defrosting operation is performed in the ninth aspect of the invention, the temperature of the gas refrigerant discharged from the auxiliary compressor **85** is easily increased. However, in this eleventh aspect of the invention, the control of lowering an operating capacity is performed to prevent the temperature of the gas refrigerant discharged from the auxiliary compressor **85** from being excessively increased.

A twelfth aspect of the invention is characterized in that in the first aspect of the invention, the hot gas introduction passage **100, 102** is directly connected to a discharge line **45** of the compression mechanism **31** of the outdoor circuit **30** and to at least one of gas side piping **110, 112** of the refrigeration heat exchangers **72, 84.**

In this twelfth aspect of the invention, the high-temperature gas refrigerant discharged from the compression mechanism **31** of the outdoor circuit **30** is introduced into at least one of the refrigeration heat exchangers **72, 84** from the gas side. Thus, the defrosting operation can be performed by using this refrigeration heat exchanger **72, 84** as a condenser and by using the other refrigeration heat exchanger as an evaporator.

A thirteenth aspect of the invention is characterized in that in the twelfth aspect of the invention, the hot gas introduction passage **100, 102** is connected to a discharge line **45** of the compression mechanism **31** of the outdoor circuit **30** and to gas side piping **110, 112** of the plurality of refrigeration heat exchangers **72, 84** and is provided with a switching mechanism **103** capable of switching or selecting the plurality of refrigeration heat exchangers **72, 84.**

In this thirteenth aspect of the invention, the defrosting operation can be performed by switching or selecting the plurality of refrigeration heat exchangers **72, 84.**

A fourteenth aspect of the invention is characterized in that in the twelfth aspect of the invention or the thirteenth aspect of the invention, the hot gas introduction passage **100,** 102 is provided with a flow control mechanism **101.**

In this fourteenth aspect of the invention, the flow of the high-temperature gas refrigerant flowing through the hot gas introduction passage **100, 102** can be controlled.

### Effects of the Invention

According to the present invention, in the refrigeration system in which at least one line of refrigeration circuit **80** of the plurality of lines of refrigeration circuits **70, 80** connected in parallel to each other has the auxiliary compressor **85** connected in series to the refrigeration heat exchanger **84,** there is provided the hot gas introduction passage **46, 89, 100, 102** for selectively introducing the gas refrigerant discharged from the compression mechanism **31** of the outdoor circuit **30** into at least one of the plurality of refrigeration heat exchangers **72, 84** and the defrosting operation by the refrigeration cycle using the refrigeration heat exchanger **72, 84** as the condenser can be performed. Thus, the refrigeration heat exchangers **72, 84** can be defrosted by the use of heat absorbed by the outdoor heat exchanger **32** and heat produced by compressing the refrigerant by the compression mechanism **31.** Further, when the refrigeration system is provided with an air-conditioning circuit, the refrigeration heat exchangers **72, 84** can be defrosted by the use of heat absorbed by the air-conditioning heat exchanger **62** at the time of the cooling operation and heat produced by compressing the refrigerant by the compression mechanism **31.**

For this reason, even if the refrigeration system is not provided with a dedicated defrosting mechanism such as an electric heater in addition to the refrigerant circuit **20,** the refrigeration system can perform a variety of patterns of defrosting operations. Thus, it is possible to prevent the construction of the refrigeration system from becoming complex. Moreover, unlike a refrigeration system in the related art in which a freezer heat exchanger is defrosted by using a chiller heat exchanger as a heat source, in this refrigeration system, it is not always necessary to bring the plural refrigeration heat exchangers **72, 84** into a good balance between heat absorption and heat dissipation at the time of the defrosting operation, so it is possible to enhance the degree of flexibility in designing the refrigeration system.

According to the second aspect of the invention, in the refrigeration circuit, the first refrigeration circuit **70** and the second refrigeration circuit **80** are connected in parallel to the outdoor circuit **30,** the first refrigeration circuit **70** having the first refrigeration heat exchanger **72,** the second refrigeration circuit **80** having the second refrigeration heat exchanger **84** and an auxiliary compressor **85.** Thus, the operation of defrosting only one of the first refrigeration heat exchanger **72** and the second refrigeration heat exchanger **84** can be performed or the operation of defrosting both of the first refrigeration heat exchanger **72** and the second refrigeration heat exchanger **84** at the same time can be performed. For this reason, it is possible to perform a variety of patterns of defrosting operations.

According to the third aspect of the invention, the plurality of refrigeration circuits **80** each having a refrigeration heat exchanger **84** and an auxiliary compressor **85** are connected in parallel to the outdoor circuit **30** in the refrigeration circuit, so for example, when there are provided two refrigeration heat exchangers **84,** the operation of defrosting only one of the refrigeration heat exchangers **84** can be performed or the operation of defrosting both of the refrigeration heat exchangers **84** at the same time can be performed. For this reason, it is possible to perform a variety of patterns of defrosting operations.

According to the fourth aspect of the invention, the plurality of refrigeration circuits **70, 80** and the air heat exchange circuit **60** are connected to the outdoor circuit 30, and the first defrosting operation using at least one of the plurality of refrigeration heat exchangers **72, 84** as a condenser and using the air heat exchanger **62** as an evaporator and the second defrosting operation using at least one of the refrigeration heat exchangers **72, 84** as a condenser and using the outdoor heat exchanger **32** as an evaporator can be performed. Thus, it is possible to perform a more variety of patterns of defrosting operations.

According to the fifth aspect of the invention, the hot gas introduction passage **46, 89** is constructed of the high stage side hot gas passage **46** and the low stage hot gas passage **89,** the high stage side hot gas passage **46** allowing a refrigerant flow to the respective refrigeration heat exchangers **72, 84** from the discharge line **45** of the compression mechanism **31** at the time of the defrosting operation, the low stage side hot gas passage **89** allowing a refrigerant flow to the refrigeration heat exchanger **84** connected to the auxiliary compressor **85** from the discharge line **22b** of the auxiliary compressor **85** at the time of the defrosting operation. Thus, the operation of selectively introducing the gas refrigerant discharged from the compression mechanism **31** of the outdoor circuit **30** into the respective refrigeration heat exchangers **72, 84** at the time of the defrosting operation can be performed with reliability. Moreover, by selectively introducing the gas refrigerant discharged from the compression mechanism **31** into the respective refrigeration heat exchangers **72, 84** from the high stage side hot gas passage **46** and the low stage hot gas passage **89,** it is possible to respond to a variety of patterns of defrosting operations.

According to the sixth aspect of the invention, in the refrigerant circuit **20** using three compressors **31a, 31b, 31c** as the compression mechanism **31** of the outdoor circuit 30 and using the four-way switching valve **37** on the suction side and having the plurality of refrigeration heat exchangers **72, 84,** it is possible to respond to a variety of patterns of defrosting operations without making the construction of the refrigerant circuit **20** complex.

According to the seventh aspect of the invention, just as with the sixth aspect of the invention, in the refrigerant circuit **20** using three compressors **31a, 31b, 31c** as the compression mechanism **31** of the outdoor circuit **30** and using the four-way switching valve **37** on the suction side and having the plurality of refrigeration heat exchangers **72, 84,** it is possible to respond to a variety of patterns of defrosting operations without making the construction of the refrigerant circuit **20** complex.

According to the eighth aspect of the invention, heat given to the refrigerant at the time of the defrosting operation can be increased, so the defrosting capacity of the refrigeration heat exchanger **84** can be increased. Thus, when the defrosting capacity is not sufficient, by performing the control of the present invention, the refrigeration heat exchanger **84** can be effectively defrosted.

According to the ninth aspect of the invention, just as with the eighth aspect of the invention, heat given to the refrigerant at the time of the defrosting operation can be increased, so the defrosting capacity of the refrigeration heat exchanger **84** can be increased. Thus, when the defrosting capacity is not sufficient, by performing the control of the present invention, the refrigeration heat exchanger **84** can be effectively defrosted.

According to the tenth aspect of the invention, by performing the liquid injecting operation at the time of defrosting operation in the ninth aspect of the invention, it is possible to avoid the temperature of the gas refrigerant discharged from the auxiliary compressor **85** from being abnormally increased and hence to protect the auxiliary compressor **85** with reliability.

According to the eleventh aspect of the invention, by decreasing the operating capacity of the auxiliary compressor **85** at the time of the defrosting operation in the ninth aspect of the invention, it is possible to avoid the temperature of the gas refrigerant discharged from the auxiliary compressor **85** from being abnormally increased and hence to protect the auxiliary compressor **85** with reliability.

According to the twelfth aspect of the invention, the hot gas introduction passage **100, 102** is directly connected to the discharge line **45** of the compression mechanism **31** of the outdoor circuit **30** and to at least one of the gas side piping **110, 112** of the refrigeration heat exchangers **72, 84.** Thus, the high-temperature gas refrigerant discharged from the compression mechanism **31** of the outdoor circuit **30** is introduced into at least one of the refrigeration heat exchangers **72, 84** from the gas side. Thus, the defrosting operation can be performed by using this refrigeration heat exchanger **72, 84** as a condenser and by using the other refrigeration heat exchanger as an evaporator.

According to the thirteenth aspect of the invention, the hot gas introduction passage **100, 102** is connected to the discharge line **45** of the compression mechanism **31** of the outdoor circuit **30** and to the gas side piping **110, 112** of the plurality of refrigeration heat exchangers **72, 84** and is provided with the switching mechanism **103** capable of switching or selecting the plurality of refrigeration heat exchangers **72, 84.** Thus, the defrosting operation can be performed by switching or selecting the plurality of refrigeration heat exchangers **72, 84.**

According to the fourteenth aspect of the invention, the hot gas introduction passage **100, 102** is provided with the flow control mechanism **101,** so the flow of the high-temperature gas refrigerant flowing through the hot gas introduction passage 100, 102 can be controlled. Here, when the flow of the gas refrigerant flowing through the hot gas introduction passage **100, 102** is large, frost adhering to the refrigeration heat exchangers **72, 84** is melted at a stretch and hence the block of the frost around the refrigeration heat exchangers **72, 84** might be dropped. However, by decreasing the flow of the refrigerant, the frost can be gradually melted and hence it is possible to prevent the block of the frost from being dropped.

### BRIEF DESCRIPTION OF THE DRAWINGS

[Fig. **1**] Fig. **1** is a refrigerant circuit diagram of a refrigeration system according to an embodiment 1.
[Fig. **2**] Fig. **2** is a refrigerant circuit diagram showing an operation at the time of a cooling operation in the embodiment 1.
[Fig. **3**] Fig. **3** is a refrigerant circuit diagram showing an example of a defrosting operation at the time of the cooling operation in the embodiment 1.
[Fig. **4**] Fig. **4** is a refrigerant circuit diagram showing another example of the defrosting operation at the time of the cooling operation in the embodiment 1.
[Fig. **5**] Fig. **5** is a refrigerant circuit diagram showing an operation at the time of a heating operation in the embodiment 1.
[Fig. **6**] Fig. **6** is a refrigerant circuit diagram showing an example of a defrosting operation at the time of the heating operation in the embodiment 1.
[Fig. **7**] Fig. **7** is a refrigerant circuit diagram showing another example of the defrosting operation at the time of the heating operation in the embodiment 1.
[Fig. **8**] Fig. **8** is a refrigerant circuit diagram of a refrigeration system according to an embodiment 2.
[Fig. **9**] Fig. **9** is a refrigerant circuit diagram showing an operation at the time of a cooling operation in the embodiment 2.
[Fig. **10**] Fig. **10** is a refrigerant circuit diagram showing an example of a defrosting operation at the time of the cooling operation in the embodiment 2.
[Fig. **11**] Fig. **11** is a refrigerant circuit diagram showing another example of the defrosting operation at the time of the cooling operation in the embodiment 2.
[Fig. **12**] Fig. **12** is a refrigerant circuit diagram showing an operation at the time of a heating operation in the embodiment 2.
[Fig. **13**] Fig. **13** is a refrigerant circuit diagram showing an example of a defrosting operation at the time of the heating operation in the embodiment 2.
[Fig. **14**] Fig. **14** is a refrigerant circuit diagram showing another example of the defrosting operation at the time of the heating operation in the embodiment 2.
[Fig. **15**] Fig. **15** is a refrigerant circuit diagram of a refrigeration system according to an embodiment 3.
[Fig. **16**] Fig. **16** is a refrigerant circuit diagram showing an operation at the time of a cooling operation in the embodiment 3.
[Fig. **17**] Fig. **17** is a refrigerant circuit diagram showing an example of a defrosting operation at the time of the cooling operation in the embodiment 3.
[Fig. **18**] Fig. **18** is a refrigerant circuit diagram showing another example of the defrosting operation at the time of the cooling operation in the embodiment 3.
[Fig. **19**] Fig. **19** is a refrigerant circuit diagram showing an operation at the time of a heating operation in the embodiment 3.
[Fig. **20**] Fig. **20** is a refrigerant circuit diagram showing an example of a defrosting operation at the time of the heating operation in the embodiment 3.
[Fig. **21**] Fig. **21** is a refrigerant circuit diagram showing another example of the defrosting operation at the time of the heating operation in the embodiment 3.
[Fig. **22**] Fig. **22** is a refrigerant circuit diagram showing an example of a defrosting operation at the time of a cooling operation in an embodiment 4.
[Fig. **23**] Fig. **23** is a refrigerant circuit diagram of a refrigeration system according to an embodiment 5.

### Reference Numeral

- 10: refrigeration system
- 20: refrigerant circuit
- 22b: discharge line (freezer side branch gas pipe)
- 25: defrosting path
- 30: outdoor circuit
- 31: compression mechanism
- 31a: DC inverter compressor (first compressor)
- 31b: first non-inverter compressor (second compressor)
- 31c: second non-inverter compressor (third compressor)
- 32: outdoor heat exchanger
- 37: third four-way switching valve
- 41 a: first suction pipe (suction pipe)
- 41b: second suction pipe (suction pipe)
- 41 c: third suction pipe (suction pipe)
- 42: first low-pressure gas pipe (base pipe of a low-pressure gas line)
- 45: discharge line (high-pressure gas pipe)
- 46: high stage side hot gas passage (hot gas introduction passage)
- 47: high-pressure introduction pipe
- 60: air-conditioning circuit
- 62: air-conditioning heat exchanger
- 70: chiller circuit (refrigeration circuit)
- 72: chiller heat exchanger (refrigeration heat exchanger)
- 80: freezer circuit (refrigeration circuit)
- 84: freezer heat exchanger (refrigeration heat exchanger)
- 85: booster compressor (auxiliary compressor)
- 88: suction line
- 89: low stage side hot gas passage (hot gas introduction passage)
- 96: first introduction passage
- 97: second introduction passage
- 98: discharge pipe
- 99: liquid injection passage
- 100: hot gas introduction passage
- 101: flow control mechanism
- 102: branch pipe (hot gas introduction passage)
- 110: gas side piping
- 112: gas side piping
- CV1: check valve
- CV2: check valve
- P1: first port
- P2: second port
- P3: third port
- P4: fourth port
- SV1: high stage side opening/closing valve
- SV2: low stage side opening/closing valve

### BEST MODE FOR CARRYING OUT THE INVENTION

The preferred embodiments of the present invention will be described below in detail with reference to the drawings.

### <<Embodiment 1 of the Invention>>

An embodiment 1 of the present invention will be described. A refrigeration system 10 of this embodiment is installed in a convenience store or the like and air-conditions the store and refrigerates the interior of a showcase.

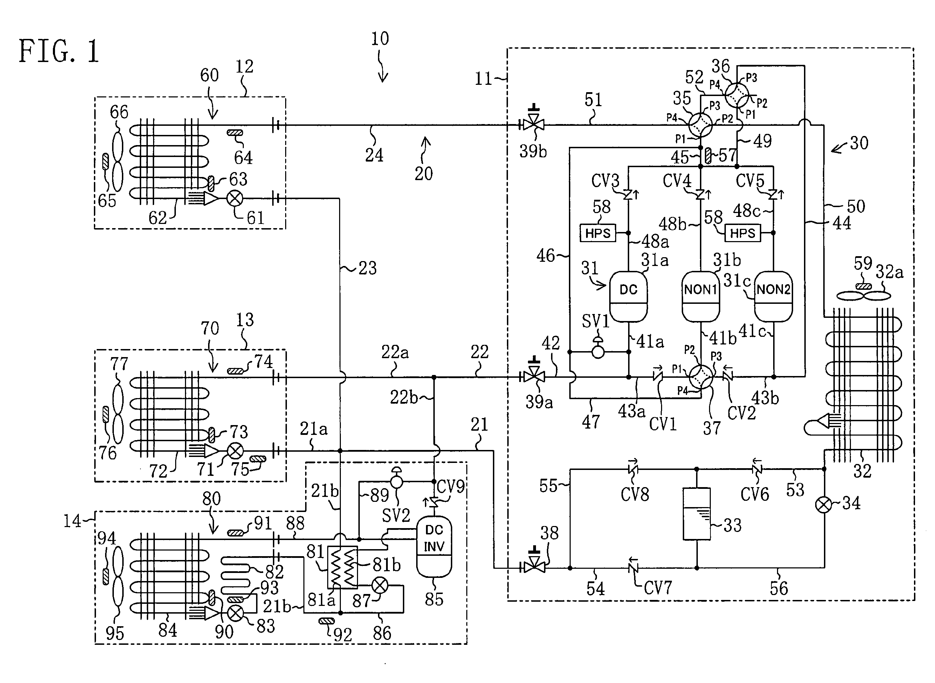

As shown in Fig. **1****,** the refrigeration system **10** of this embodiment has an outdoor unit **11,** an air-conditioning unit **12,** a chiller showcase **13** as a chiller unit, a freezer showcase **14** as a freezer unit. The outdoor unit **11** is installed outdoors. On the other hand, all of the air-conditioning unit **12,** the chiller showcase **13,** and the freezer showcase **14** are installed in the convenience store or the like.

The outdoor unit **11** is provided with an outdoor circuit **30.** The air-conditioning unit **11** is provided with an air-conditioning circuit (air heat exchanger circuit) **60.** The chiller showcase **13** is provided with a chiller circuit (first refrigeration circuit) **70.** The freezer showcase **14** is provided with a freezer circuit (second refrigeration circuit) **80.** In this refrigeration system **10,** these circuits **30, 60, 70,** and **80** are connected by piping to construct a refrigerant circuit **20.** The refrigerant circuit **20** includes a chiller/freezer circuit and an air-conditioning circuit.

On the chiller/freezer side of the refrigerant circuit **20,** the chiller circuit **70** and the freezer circuit **80** both of which are the refrigeration circuits are connected in parallel to the outdoor circuit **30.** Specifically, the chiller circuit **70** and the freezer circuit **80** are connected to the outdoor circuit **30** via first liquid side connection piping **21** and first gas side connection piping **22.** The first liquid side connection piping **21** has its one end connected to the outdoor circuit **20.** The first liquid side connection piping **21** has its other end branched into two parts and has one (chiller side branch liquid pipe **21 a)** of the branched parts connected to the liquid side end of the chiller circuit **70** and has the other (freezer side branch liquid pipe **21b)** of the branched parts connected to the liquid side end of the freezer circuit **80.** The first gas side connection piping **22** has its one end connected to the outdoor circuit **30.** The first gas side connection piping **22** has its other end branched into two parts and has one (chiller side branch gas pipe **22a**) of the branched parts connected to the gas side end of the chiller circuit **70** and has the other (freezer side branch gas pipe **22b)** of the branched parts connected to the gas side end of the freezer circuit **80.**

Moreover, on the air-conditioning side of the refrigerant circuit **20,** the air-conditioning circuit **60** is connected to the outdoor circuit **30** via second liquid side connection piping **23** branched from the first liquid side connection piping **21** and second gas side connection piping **24.** The second liquid side connection piping **23** has its one end connected to the outdoor circuit **30** via the first liquid side connection piping **21** and has its other end connected to the liquid side end of the air-conditioning circuit **60.** The second gas side connection piping **24** has its one end connected to the outdoor circuit **30** and has its other end connected to the gas side end of the air-conditioning circuit **60.**

### (Outdoor Unit)

As described above, the outdoor unit **11** is provided with the outdoor circuit **30.** The outdoor circuit **30** is provided with a compression mechanism **31,** an outdoor heat exchanger **32,** a receiver **33,** and an outdoor expansion valve **34.** Moreover, the outdoor circuit **30** is provided with a first four-way switching valve **35,** a second four-way switching valve **36,** a third four-way switching valve **37,** a liquid side stop valve **38,** a first gas side stop valve **39a,** and a second gas side stop valve **39b.** In this outdoor circuit **30,** the liquid side stop valve **38** has the first liquid side connection piping **21** connected thereto and the first gas side stop valve **39a** has the first gas side connection piping **22** connected thereto and the second gas side stop valve **39b** has the second gas side connection piping **24** connected thereto.

The compression mechanism **31** is constructed of a DC inverter compressor **31a** of a first compressor, a first non-inverter compressor **31b** of a second compressor, and a second non-inverter compressor **31c** of a third compressor, which are connected in parallel to each other. The respective compressors **31a, 31b,** and **31c** are scroll compressors of a hermetic high-pressure dome type, respectively. The DC inverter compressor **31a** is supplied with electric power via an inverter. By changing the output frequency of the inverter of the DC inverter compressor **31a** to change the rotation speed of its electric motor, the operation capacity of the DC inverter compressor **31a** can be adjusted. On the other hand, the first non-inverter compressor **31b** and the second non-inverter compressor **31c** have their electric motors driven always at their specified rotation speeds and hence have their operation capacities kept constant.

The DC inverter compressor **31a** has one end of a first suction pipe **41a** connected to its suction side. The first non-inverter compressor **31b** has one end of a second suction pipe **41b** connected to its suction side. The second non-inverter compressor **31c** has one end of a third suction pipe **41c** connected to its suction side.

The other end of the first suction pipe **41a** is connected to a first low-pressure gas pipe **42** of the base pipe of a chiller/freezer line low-pressure gas line and a first communication pipe **43a** and the first low-pressure gas pipe **42** is connected to the first gas side stop valve **39a.** The first suction pipe **41a** is connected to a first port **P1** of the third four-way switching valve **37** via the first communication pipe **43a.** The first communication pipe **43a** is provided with a check valve **CV1** for prohibiting a refrigerant flow to the DC inverter compressor **31a.** The other end of the second suction pipe **41a** is connected to a second port **P2** of the third four-way switching valve **37.** The other end of the third suction pipe **41c** is connected to a second low-pressure gas pipe **44** and a second communication pipe **43b** and the second low-pressure gas pipe **44** is connected to a second four-way switching valve **36.** The third suction pipe **41c** is connected to a third port **P3** of the third four-way switching valve **37** via the second communication pipe **43b.** The second communication pipe **43b** is provided with a check valve **CV2** for prohibiting a refrigerant flow to the second non-inverter compressor **31c.**

The compression mechanism **31** has a high-pressure gas pipe (discharge line) **45** connected to its discharge side. The high-pressure gas pipe **45** has one end of a high stage side hot gas passage **46** connected thereto and the other end of the high stage side hot gas passage **46** is connected to the first suction pipe **41a.** The high stage side hot gas passage **46** has a first solenoid valve **SV1** as a high stage side opening/opening valve. The high stage side hot gas passage **46** is a passage which is connected to the discharge line **45** of the compression mechanism **31** of the outdoor circuit **30** and to the first low-pressure gas pipe **42** of the base pipe of the low-pressure gas line of the respective refrigeration circuits **70, 80** and allows a refrigerant flow to the respective refrigeration heat exchangers **72, 84** from the discharge line **45** of the compression mechanism **31** at the time of the defrosting operation.

The high stage side hot gas passage **46** has one end of a high-pressure introduction pipe **47** connected between the discharge side of the compression mechanism **31** and the first solenoid valve **SV1.** The high-pressure introduction pipe **47** communicates with the high pressure line of the compression mechanism **31** via the high stage side hot gas passage **46** and has its other end connected to a fourth port **P4** of the third four-way switching valve **37.**

This third four-way switching valve **37** can switch between a first state (state shown by a solid line in Fig. **1**) in which the first port **P1** and the second port **P2** communicate with each other and in which the third port **P3** and the fourth port **P4** communicate with each other and a second state (state shown by a broken line in Fig. 1) in which the first port **P1** and the fourth port **P4** communicate with each other and in which the second port **P2** and the third port **P3** communicate with each other.

The DC inverter compressor **31a** has a first discharge pipe **48a** connected to its discharge side and the first non-inverter compressor **31b** has a second discharge pipe **48b** connected to its discharge side and the second non-inverter compressor **31c** has a third discharge pipe **48c** connected to its discharge side. The first discharge pipe **48a** is provided with a check valve **CV3** for prohibiting a refrigerant flow to the DC inverter compressor **31a** and the second discharge pipe **48b** is provided with a check valve **CV4** for prohibiting a refrigerant flow to the first non-inverter compressor **31b** and the third discharge pipe **48c** is provided with a check valve **CV5** for prohibiting a refrigerant flow to the second non-inverter compressor **31c.** The first discharge pipe **48a,** the second discharge pipe **48b,** and the third discharge pipe **48c** are merged with each other and connected to the high-pressure gas pipe **45.** The third discharge pipe **48c** has a discharge connection pipe **49** connected between the point where the third discharge pipe **48c** is connected to the high pressure pipe **45** and the check valve **CV5.**

In the first four-way switching valve **35,** the first port **P1** is connected to the high-pressure gas pipe **45** and the second port **P2** is connected to the outdoor heat exchanger **32** via a first gas pipe **50** and the third port **P3** is connected to the second four-way switching valve **36** via a gas connection pipe **52** and the fourth port **P4** is connected to the second gas side stop valve **39b** via a second gas pipe **51.** The first four-way switching valve **35** can switch between a first state (state shown by a solid line in Fig. **1****)** in which the first port **P1** and the second port **P2** communicate with each other and in which the third port **P3** and the fourth port **P4** communicate with each other and a second state (state shown by a broken line in Fig. **1**) in which the first port **P1** and the fourth port **P4** communicate with each other and in which the second port **P2** and the third port **P3** communicate with each other.

In the second four-way switching valve **36**, the first port **P1** is connected to the discharge connection pipe **49** and the third port **P3** is connected to the second low-pressure gas pipe **44** and the fourth port **P4** is connected to the gas connection pipe **52.** Moreover, the second four-way switching valve **36** has its second port **P2** closed. This second four-way switching valve **36** can switch between a first state (state shown by a solid line in Fig. **1**) in which the first port **P1** and the second port **P2** communicate with each other and in which the third port **P3** and the fourth port **P4** communicate with each other and a second state (state shown by a broken line in Fig. **1**) in which the first port **P1** and the fourth port **P4** communicate with each other and in which the second port **P2** and the third port **P3** communicate with each other.

The outdoor heat exchanger **32** is a fin-and-tube heat exchanger of a cross fin type and constructs a heat source side heat exchanger. An outdoor fan **32a** is disposed near the outdoor heat exchanger **32.** Outdoor air is sent to the outdoor heat exchanger **32** by the outdoor fan **32a** and heat is exchanged between the refrigerant and the outdoor air in the outdoor heat exchanger **32.** The outdoor heat exchanger **32,** as described above, has its one end connected to the first four-way switching valve **35.** On the other hand, the outdoor heat exchanger **32** has its other end connected to the top of a receiver **33** via a first liquid pipe **53.** The first liquid pipe **53** is provided with a check valve **CV6** that allows a refrigerant flow to the receiver **33** from the outdoor heat exchanger **32** and prohibits a back flow.

The receiver **33** has one end of a second liquid pipe **54** connected to its bottom. The second liquid pipe **54** has its other end connected to a liquid side stop valve **38.** The second liquid pipe **54** is provided with a check valve **CV7** that allows a refrigerant flow to a liquid side stop valve **38** from the receiver **33** and prohibits a back flow.

In the second liquid pipe **54,** one end of a third liquid pipe **55** is connected between the check valve **CV7** and the liquid side stop valve **38.** The other end of the third liquid pipe **55** is connected to the top of the receiver **33.** The third liquid pipe **55** is provided with a check valve **CV8** that allows a refrigerant flow to the receiver **33** from the liquid side stop valve **38** and prohibits a back flow.

One end of a fourth liquid pipe **56** is connected between the receiver **33** and the check valve **CV7** in the second liquid pipe **54.** The other end of the fourth liquid pipe **56** is connected between the outdoor heat exchanger **32** and check valve **CV6** in the first liquid pipe **53.** Moreover, the fourth liquid pipe **56** is provided with an outdoor expansion valve **34.**

The outdoor circuit **30** is provided with also various sensors and pressure switches. For example, the high-pressure gas pipe **45** is provided with a discharge temperature sensor **57** and a discharge pressure sensor (not shown). Each of the first discharge pipe **48a** and the third discharge pipe **48c** is provided with a high-pressure pressure sensor **58.** Moreover, each of the suction pipes **41a, 41b,** and **41c** is provided with a suction temperature sensor and a suction pressure sensor although they are not shown. Furthermore, an outdoor air temperature sensor **59** is disposed near the outdoor fan **32a.**

### (Air-conditioning Unit)

As described above, the air-conditioning unit **12** has an air-conditioning circuit (air heat exchange circuit) **60.** In the air-conditioning circuit **60,** an air-conditioning expansion valve **61** and an air heat exchanger **62** are disposed in this order from a liquid side end to a gas side end. The air heat exchanger **62** is constructed of a fin-and-tube heat exchanger of a cross fin type. In this air heat exchanger **62,** heat is exchanged between the refrigerant and the indoor air. On the other hand, the air-conditioning expansion valve **61** is constructed of an electronic expansion valve.

The air-conditioning unit **12** is provided with a heat exchanger temperature sensor **63** and a refrigerant temperature sensor **64.** The heat exchanger temperature sensor **63** is disposed in a heat exchanger tube of the air heat exchanger **62.** The refrigerant temperature sensor **64** is disposed near a gas side end in the air-conditioning circuit **60.** Moreover, the air-conditioning unit **12** is provided with an indoor air temperature sensor **65** and an air-conditioning fan **66.** Indoor air in the store is sent to the air heat exchanger **62** by the air-conditioning fan **66.**

### (Chiller showcase)

As described above, the chiller showcase **13** has a chiller circuit **70.** In the chiller circuit **70,** a chiller expansion valve **71** and a chiller heat exchanger (first refrigeration heat exchanger) **72** are disposed in this order from its liquid side end to a gas side end. The chiller heat exchanger **72** is constructed of a fin-and-tube heat exchanger of a cross fin type. In this chiller heat exchanger **72,** heat is exchanged between the refrigerant and the air in the chiller showcase **13.** On the other hand, the chiller expansion valve **71** is constructed of an electronic expansion valve.

The chiller showcase **13** is provided with a heat exchanger temperature sensor **73** and refrigerant temperature sensors **74, 75.** The heat exchanger temperature sensor **73** is disposed in a heat exchanger tube of the chiller heat exchanger **72.** A gas refrigerant temperature sensor **74** is disposed near a gas side end in the chiller circuit **70** and a liquid refrigerant temperature sensor **75** is disposed near a liquid side end in the chiller circuit **70.** Moreover, the chiller showcase **13** is provided with a chiller temperature sensor **76** and a chiller fan **77.** Air in the chiller showcase **13** is sent to the chiller heat exchanger **72** by the chiller fan **77.**

### (Freezer showcase)

As described above, the freezer showcase **14** has a freezer circuit **80.** In the freezer circuit **80,** a refrigerant heat exchanger **81,** a drain pan heater **82,** a freezer expansion valve **83,** a freezer heat exchanger (second refrigeration heat exchanger) **84,** and a DC inverter compressor used as a booster compressor (auxiliary compressor) **85** are disposed in this order from its liquid side end to a gas side end. The freezer heat exchanger **84** is constructed of a fin-and-tube heat exchanger of a cross fin type. In this freezer heat exchanger **84,** heat is exchanged between the refrigerant and the air in the freezer showcase **14.** On the other hand, the freezer expansion valve **83** is constructed of an electronic expansion valve. The freezer expansion valve **83** is an expansion valve that is disposed in a freezer circuit **80** and can change the degree of opening.

The refrigerant heat exchanger **81** is a heat exchanger in which the refrigerants exchange heat between them and is constructed of a plate heat exchanger, for example. This refrigerant heat exchanger **81** has a high pressure side passage **81a** connected to a freezer side branch liquid pipe **21b** and a low pressure side passage **81b** connected to a branch pipe **86** branched from the downstream side of the high pressure side passage **81a** in the freezer side branch liquid pipe **21b.** The branch pipe **86** has an electronic expansion valve disposed upstream of the low pressure side passage **81b** and has the downstream side of the low pressure side passage **81b** connected to an intermediate-pressure position of the booster compressor **85**. An economizer is constructed of the refrigerant heat exchanger **81** and the electronic expansion valve **87.**

A check valve **CV9** that allows refrigerant to be discharged from the booster compressor **85** and prohibits the back flow of the refrigerant is disposed in a freezer side branch gas pipe **22b** of the discharge line of the booster compressor **85.** A low stage side hot gas passage **89** is connected between a downstream position of the check valve **CV9** in the freezer side branch gas pipe **22b** and a suction pipe **88** of the suction line of the booster compressor **85.** The low stage side hot gas passage **89** is a passage, which is connected to the freezer side branch gas pipe **22b** and the suction pipe **88** and allows a refrigerant flow to the freezer heat exchanger **84** from the freezer side branch gas pipe **22b** at the time of the defrosting operation, and is provided with a second solenoid valve **SV2** of a low stage side opening/opening valve.

The freezer showcase **14** is provided with a heat exchanger temperature sensor **90** and refrigerant temperature sensors **91, 92.** The heat exchanger temperature sensor **90** is fixed to a heat exchanger tube of the freezer heat exchanger **84.** A gas refrigerant temperature sensor **91** is disposed near a gas side end in the freezer circuit **80.** A liquid refrigerant temperature sensor **92** is disposed near a liquid side end in the freezer circuit **80.** A drain pan heater temperature sensor **93** is disposed near the drain pan heater **82.** Moreover, the freezer showcase **14** is provided with a freezer temperature sensor **94** and a freezer fan **95.** Air in the freezer showcase **14** is sent to the freezer heat exchanger **84** by the freezer fan **95.**

### (Entire Construction of Refrigerant Circuit)

As described above, the refrigerant circuit **20** of this embodiment has the chilling/freezer line side circuit and the air-conditioning line side circuit. In the chilling/freezer line side circuit, the plural refrigeration circuits (chiller circuit **70** and freezer circuit **80),** which have refrigeration heat exchangers **72, 84** respectively, are connected in parallel to the outdoor circuit **30** provided with the outdoor heat exchanger **32** and the compression mechanism **31.** In at least the freezer circuit **30** of one line refrigeration circuit, the booster compressor **85** is connected in series to the freezer heat exchanger **84.**

The refrigerant circuit **20** of this embodiment has a high stage side hot gas passage **46** and a low stage side hot gas passage **89** as hot gas introduction passages **46, 89** for selectively introducing the gas refrigerant discharged from the compression mechanism **31** of the outdoor circuit **30** into at least one of the plural refrigeration heat exchangers **72, 84** and is constructed so as to perform the defrosting operation of conducting the refrigeration cycle by using the refrigeration heat exchangers **72, 84** as condensers.

Moreover, the refrigerant circuit **20** includes the air-conditioning circuit **60** that has the air-conditioning heat exchanger **62** and air-conditions the room. As will be described later, the refrigerant circuit **20** is constructed so as to perform the defrosting operation (first defrosting operation) at the time of a cooling operation in which the refrigeration heat exchangers **72, 84** are used as condensers and in which the air-conditioning heat exchanger **62** is used an evaporator and the defrosting operation (second defrosting operation) at the time of a heating operation in which the refrigeration heat exchangers **72, 84** are used as condensers and in which the outdoor heat exchanger **32** is used an evaporator.

### - Operation -

Of operations performed by the refrigeration system, main operations will be described below.

### (Cooling Operation)

A cooling operation is the operation of refrigerating air in the chiller showcase **13** and the freezer showcase **14** and refrigerating air in the store by the air-conditioning unit **12** to cool the interior of the store.

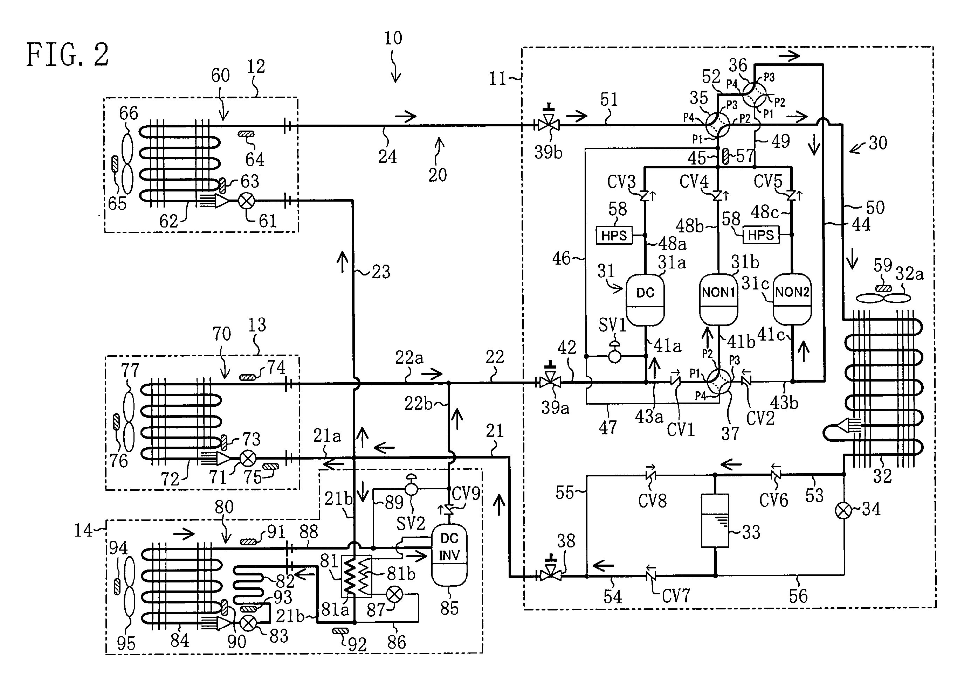

As shown in Fig. **2****,** in the refrigerant circuit **20,** the first four-way switching valve **35,** the second four-way switching valve **36,** and the third four-way switching valve **37** are set to the first state. Moreover, the outdoor expansion valve **34** is totally closed, and the air-conditioning expansion valve **61,** the chiller expansion valve **71,** and the freezer expansion valve have their degrees of opening suitably adjusted, and the first solenoid valve **SV1** of the high stage side hot gas passage **46** and the second solenoid valve **SV2** of the low stage side hot gas passage **89** are closed. In this state, the DC inverter compressor **31a,** the first non-inverter compressor **31b,** the second non-inverter compressor **31c,** and the booster compressor **85** are operated.

The refrigerants discharged from the DC inverter compressor **31a,** the first non-inverter compressor **31b,** and the second non-inverter compressor **31c** pass through the respective discharge pipes **48a, 48b, and 48c** and merge with each other in the high-pressure gas pipe **45.** Then, the refrigerant after merging passes through the first four-way switching valve **35** and is sent to the outdoor heat exchanger **32.** In the outdoor heat exchanger **32,** the refrigerant dissipates heat to the outdoor air, thereby being condensed. The refrigerant condensed in the outdoor heat exchanger **32** passes through the receiver **33** and flows to the first liquid side connection piping **21** and is distributed to the chiller side branch liquid pipe **21a,** the freezer side branch liquid pipe **21b,** and the second liquid side connection piping **23.**

The refrigerant flowing into the chiller circuit **70** from the chiller side branch liquid pipe **21a** has its pressure reduced when the refrigerant passes the chiller expansion valve **71** and then is introduced into the chiller heat exchanger **72.** In the chiller heat exchanger **72,** the refrigerant absorbs heat from the air in the chiller showcase **13,** thereby being evaporated. At this time, in the chiller heat exchanger **72,** the evaporation temperature of the refrigerant is set to about -5°C, for example. The refrigerant evaporated in the chiller heat exchanger **72** flows through the chiller side branch gas pipe **22a** and flows into the first gas side connection piping **22.** In the chiller showcase **13,** the air refrigerated by the chiller heat exchanger **72** is supplied into the chiller showcase **13,** whereby the temperature in the chiller showcase **13** is kept at about 5°C, for example.

The refrigerant flowing from the freezer side branch liquid pipe **21b** into the freezer circuit **80** passes through the refrigerant heat exchanger **81** and the drain pan heater **82.** Then, when the refrigerant passes through the freezer expansion valve **83,** the refrigerant has its pressure reduced and then is introduced into the freezer heat exchanger **84.** In the freezer heat exchanger **84,** the refrigerant absorbs heat from the air in the freezer showcase **14,** thereby being evaporated. At this time, in the freezer heat exchanger **84,** the evaporation temperature of the refrigerant is set at about -30 °C, for example. In the freezer showcase **14,** the air in the freezer showcase **14** refrigerated by the freezer heat exchanger **84** is supplied into the freezer showcase **14,** whereby the temperature in the freezer showcase **14** is kept at about -20°C, for example.

The refrigerant evaporated in the freezer heat exchanger **84** passes through the suction pipe **88** and is sucked into the booster compressor **85.** The refrigerant compressed by the booster compressor **85** passes through the discharge pipe **98** and the freezer side branch gas pipe **22b** and flows into the first gas side connection piping **22.**

In the first gas side connection piping **22,** the refrigerant sent from the chiller circuit 70 and the refrigerant sent from the freezer circuit **80** merge with each other. These refrigerants pass through the first gas side connection piping **22** and the first low-pressure suction pipe **42** and flow into the first suction pipe **41a** and the second suction pipe **41b** and then are sucked by the DC inverter compressor **31a** and the first non-inverter compressor **31b.** The DC inverter compressor **31a** and the first non-inverter compressor **31b** compress the sucked refrigerants and discharge the refrigerants to the first discharge pipe **48a** and the second discharge pipe **48b.**

On the other hand, the refrigerant flowing into the second liquid side connection piping **23** is supplied to the air-conditioning circuit **60.** The refrigerant flowing into the air-conditioning circuit **60** has its pressure reduced when the refrigerant passes through the air-conditioning expansion valve **61.** Then, the refrigerant is introduced into the air-conditioning heat exchanger **62.** In the air-conditioning heat exchanger **62,** the refrigerant absorbs heat from the indoor air, thereby being evaporated. In the air-conditioning unit **12,** the indoor air cooled by the air-conditioning heat exchanger **62** is supplied into the store. The refrigerant evaporated in the air-conditioning heat exchanger **62** passes through the second gas side connection piping **24** and flows into the outdoor circuit **30** and passes through the second gas pipe **51,** the first four-way switching valve **35,** and the second four-way switching valve **36** in sequence and then passes through the second low-pressure gas pipe **44** and the third suction pipe **41c** and then is sucked by the second non-inverter compressor **31c.** The second non-inverter compressor **31c** compresses the sucked refrigerant and discharges the refrigerant to the third discharge pipe **48c.**

At the time of the cooling operation shown in Fig. **2****,** by setting the third four-way switching valve **37** to the first state, two compressors **31a, 31b** are used for the chilling/freezer line side circuit and one compressor **31c** is used for the air-conditioning line side circuit. However, by switching the third four-way switching valve **37** to the second state, it is also possible to use one compressor **31a** for the chilling/freezer line side circuit and to use two compressors **31b, 31c** for the air-conditioning line side circuit. Moreover, by stopping one of three compressors **31a, 31b, and 31c** in a state in which the third four-way switching valve **37** is set to either the first state or the second state, it is also possible to use one compressor for each of the chilling/freezer line side circuit and the air-conditioning line side circuit.

### (Defrosting Operation at the time of the Cooling Operation)

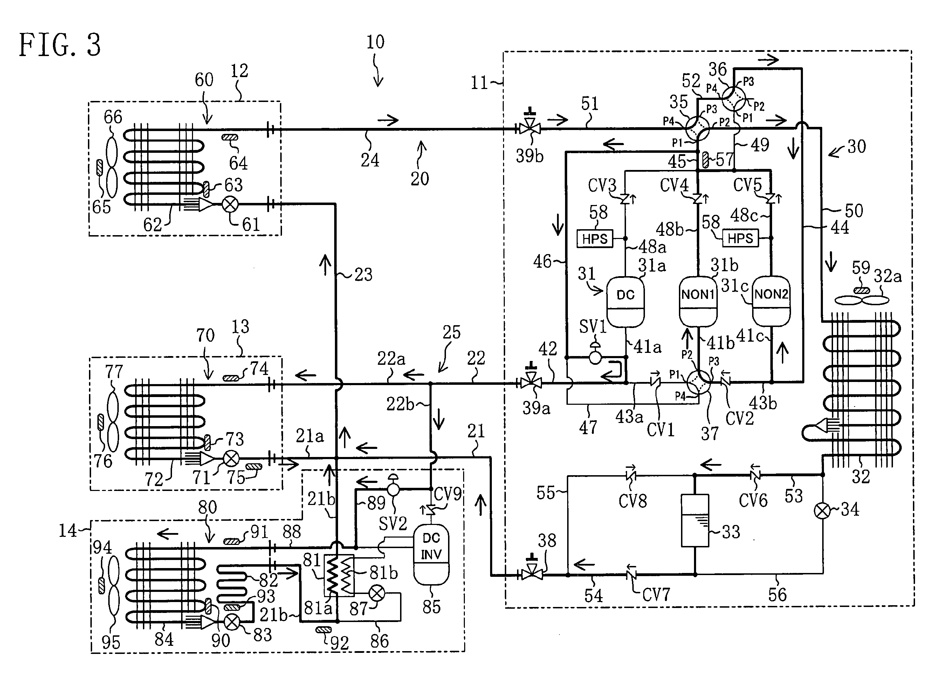

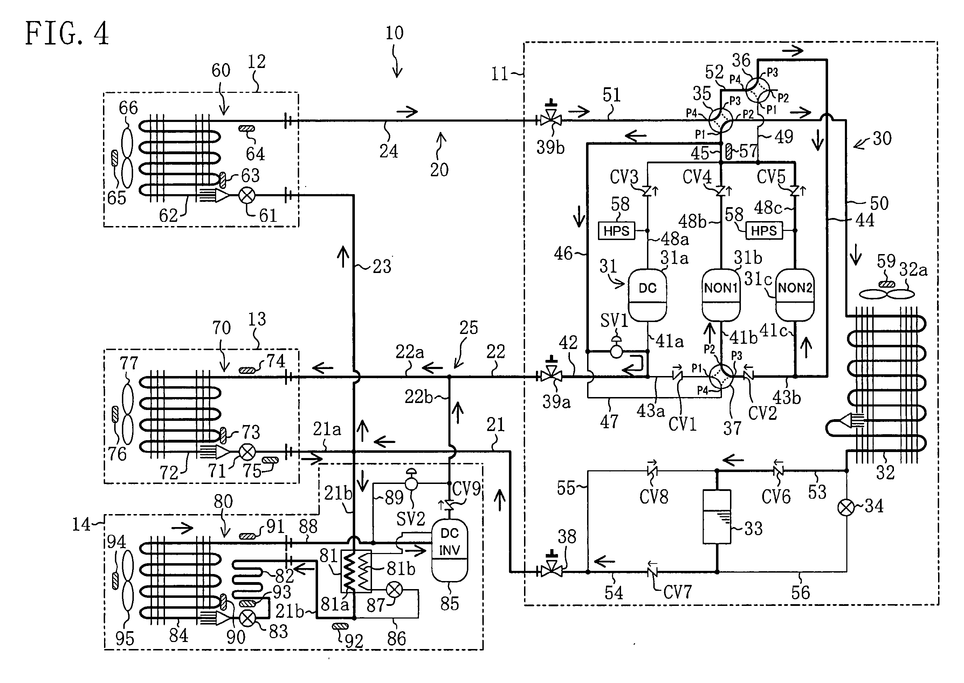

As for the defrosting operation at the time of the cooling operation, the defrosting operation shown in Fig. **3** in which the chiller heat exchanger **72** and the freezer heat exchanger **84** are defrosted at the same time and the defrosting operation shown in Fig. **4** in which the chiller heat exchanger **72** is defrosted while the freezer heat exchanger **84** performs a freezing operation can be performed. Here, a refrigerant flow at the time of the defrosting operation (defrosting path) is designated by a reference symbol **25.**

First, the defrosting operation shown in Fig. **3** will be described.

As shown in Fig. **3****,** in the refrigerant circuit **20,** the first four-way switching valve **35** and the second four-way switching valve **36** are set to the first state and the third four-way switching valve **37** is set to the second state. Moreover, the outdoor expansion valve **34** is totally closed and the chiller expansion valve **71** and the freezer expansion valve **83** are fully opened, whereas the air-conditioning expansion valve **61** has its degree of opening suitably adjusted. The first solenoid valve **SV1** of the high stage side hot gas passage **46** and the second solenoid valve **SV2** of the low stage side hot gas passage **89** are opened. In this state, the first non-inverter compressor **31b** and the second non-inverter compressor **31c** are operated.

The refrigerant discharged from the first non-inverter compressor **31b** and the refrigerant discharged from the second non-inverter compressor **31c** pass through the respective discharge pipes **48b, 48c** and merge with each other in the high-pressure pipe **45.** The refrigerant after merging passes through the first four-way switching valve **35** and the first gas pipe **50** and is sent to the outdoor heat exchanger **32.** In the outdoor heat exchanger **32,** the refrigerant dissipates heat to the outdoor air, thereby being condensed. The refrigerant condensed in the outdoor heat exchanger **32** passes through the receiver **33** and flows through the first liquid side connection piping **21** and then flows into the second liquid side connection pipe **23.**

On the other hand, part of the refrigerant discharged from the first non-inverter compressor **31b** and the second non-inverter compressor **31c** flows through the high stage side hot gas passage **46,** the first low-pressure gas pipe **42,** and the first gas side connection piping **22** and then is distributed to the chiller side branch gas pipe **22a** and the freezer side branch gas pipe **22b.**

The refrigerant flowing through the chiller side branch gas pipe **22a** flows into the chiller heat exchanger **72.** In the chiller heat exchanger **72,** the refrigerant dissipates heat to the air in the chiller showcase **13,** thereby being condensed. At that time, frost adhering to the chiller heat exchanger **72** is melted. The refrigerant condensed in the chiller heat exchanger **72** passes through the chiller expansion valve **71** and flows through the chiller side branch liquid pipe **21a** and then flows into the second liquid side connection piping **23** and there merges with the refrigerant from the outdoor unit **11.**

The refrigerant flowing through the freezer side branch gas pipe **22b** passes through the low stage side hot gas passage **89** and flows into the freezer heat exchanger **84** where the refrigerant dissipates heat to the air in the freezer showcase **14,** thereby being condensed. At that time, frost adhering to the freezer heat exchanger **84** is defrosted. The refrigerant condensed in the freezer heat exchanger **84** passes through the freezer expansion valve **83,** the drain pan heater **82,** the refrigerant heat exchanger **81,** and flows through the freezer side branch liquid pipe **21b** and then flows into the second liquid side connection piping **23** and there merges with the refrigerant from the outdoor unit **11.**

The refrigerant after merging in the second liquid side connection piping **23** is supplied to the air-conditioning circuit **60.** The refrigerant flowing into the air-conditioning circuit **60** has its pressure reduced when the refrigerant passes through the air-conditioning expansion valve **61.** Then, the refrigerant is introduced into the air-conditioning heat exchanger **62.** In the air-conditioning heat exchanger **62,** the refrigerant absorbs heat from the indoor air, thereby being evaporated. In the air-conditioning unit **12,** the indoor air cooled by the air-conditioning heat exchanger **62** is supplied into the store. The refrigerant evaporated in the air-conditioning heat exchanger **62** passes through the second gas side connection piping **24** and flows into the outdoor circuit **30** and then passes through the second gas pipe **51,** the first four-way switching valve **35,** and the second four-way switching valve **36** in sequence, and then passes through the second low-pressure gas pipe **44,** the second suction pipe **41b,** and the third suction pipe **41c,** and then is sucked by the first non-inverter compressor **31b** and the second non-inverter compressor **31c.** The first non-inverter compressor **31b** and the second non-inverter compressor **31c** compress the sucked refrigerant and discharge the refrigerant into the second discharge pipe **48b** and the third discharge pipe **48c,** respectively.

As described above, in the defrosting operation shown in Fig. **3****,** the chiller heat exchanger **72** and the freezer heat exchanger **84** can be defrosted at the same time by the use of heat absorbed by the indoor heat exchanger **62** and heat produced by compressing the refrigerant by the first and second non-inverter compressors **31b, 31c.**

Here, Fig. **3** shows the operation using two compressors of the first non-inverter compressor **31b** and the second non-inverter compressor **31c,** but only any one of the compressors may be operated.

Moreover, in the case of defrosting only the freezer heat exchanger **84,** it suffices to perform an operation in which the chiller expansion valve **71** is closed to prevent the refrigerant from flowing through the chiller showcase **13** in the operation state shown in Fig. **3**.

Next, the defrosting operation shown in Fig. **4** will be described.

As shown in Fig. **4****,** in the refrigerant circuit **20,** the first four-way switching valve **35** and the second four-way switching valve **36** are set to the first state and the third four-way switching valve **37** is set to the second state. Moreover, the outdoor expansion valve **34** is totally closed and the chiller expansion valve **71** is fully opened, whereas the freezer expansion valve **83** and the air-conditioning expansion valve **61** have their degrees of opening suitably adjusted. The first solenoid valve **SV1** of the high stage side hot gas passage **46** is opened and the second solenoid valve **SV2** of the low stage side hot gas passage **89** is closed. In this state, the first non-inverter compressor **31b,** the second non-inverter compressor **31c,** and the booster compressor **85** are operated.

The refrigerant discharged from the first non-inverter compressor **31b** and the refrigerant discharged from the second non-inverter compressor **31c** pass through the respective discharge pipes **48b, 48c** and merge with each other in the high-pressure pipe **45.** The refrigerant after merging passes through the first four-way switching valve **35** and the first gas pipe **50** and is sent to the outdoor heat exchanger **32.** In the outdoor heat exchanger **32,** the refrigerant dissipates heat to the outdoor air, thereby being condensed. The refrigerant condensed in the outdoor heat exchanger **32** passes through the receiver **33** and flows through the first liquid side connection piping **21** and then is distributed to the second liquid side connection piping **23** and the freezer side branch liquid pipe **21b.**

The refrigerant flowing into the freezer heat circuit **80** from the freezer side branch gas pipe **21b** passes through the refrigerant heat exchanger **81** and the drain pan heater **82.** Then, when the refrigerant passes through the freezer expansion valve **83,** the refrigerant has its pressure reduced and then is introduced into the freezer heat exchanger **84.** In the freezer heat exchanger **84,** the refrigerant absorbs heat from the air in the freezer showcase **14** and evaporates. At that time, in the freezer heat exchanger **84,** the evaporation temperature of the refrigerant is set to about -30 °C, for example. In the freezer showcase **14,** the air in the freezer showcase **14** cooled by the freezer heat exchanger **84** is supplied, whereby the temperature in the freezer showcase **14** is kept at about -20°C, for example.

The refrigerant evaporated by the freezer heat exchanger **84** passes through the suction pipe **88** and then is sucked by the booster compressor **85.** The refrigerant compressed by the booster compressor **85** passes through the discharge pipe **98** and the freezer side branch gas pipe **22b** and then flows into the first gas side connection piping **22.** At this time, the electronic expansion valve **87** disposed in the branch pipe **86** has the degree of opening controlled and performs the function of an economizer. For this reason, the discharge pressure of the booster compressor **85** is increased to a level nearly equal to the discharge pressure of the first non-inverter compressor **31b** and the second non-inverter compressor **31c.**

On the other hand, part of the refrigerant discharged from the first non-inverter compressor **31b** and the second non-inverter compressor **31c** flows through the high stage side hot gas passage **46,** the first low-pressure gas pipe **42,** and the first gas side connection piping **22** and then merges with the refrigerant from the freezer unit **14** and then flows through the chiller side branch gas pipe **22a.**

The refrigerant flowing through the chiller side branch gas pipe **22a** flows into the chiller heat exchanger **72.** In the chiller heat exchanger **72,** the refrigerant dissipates heat to the air in the chiller showcase **13,** thereby being condensed. At that time, frost adhering to the chiller heat exchanger **72** is melted. The refrigerant condensed in the chiller heat exchanger **72** passes through the chiller expansion valve **71** and flows through the chiller side branch liquid pipe **21a.** Then, the refrigerant is distributed, together with the refrigerant from the outdoor unit **11,** to the second liquid side connection piping **23** and the freezer side branch liquid pipe **21b.**

The refrigerant flowing through the second liquid side connection piping **23** is supplied to the air-conditioning circuit **60.** When the refrigerant flowing into the air-conditioning circuit **60** passes through the air-conditioning expansion valve **61,** the refrigerant has its pressure reduced and then is introduced into the air-conditioning heat exchanger **62.** In the air-conditioning heat exchanger **62,** the refrigerant absorbs heat from the indoor air, thereby being evaporated. In the air-conditioning unit **12,** the indoor air cooled by the air-conditioning heat exchanger **62** is supplied into the store. The refrigerant evaporated in the air-conditioning heat exchanger **62** passes through the second gas side connection piping **24** and flows into the outdoor heat exchanger **30** and then passes through the second gas pipe **51,** the first four-way switching valve **35,** and the second four-way switching valve **36** in sequence and then passes through the second low-pressure gas pipe **44,** the second suction pipe **41b,** and the third suction pipe **41c** and then is sucked by the first non-inverter compressor **31b** and the second non-inverter compressor **31c.** The first non-inverter compressor **31b** and the second non-inverter compressor **31c** compress the sucked refrigerant and discharge the compressed refrigerant into the second discharge pipe **48b** and the third discharge pipe **48c.**

As described above, in the defrosting operation shown in Fig. **4****,** the chiller heat exchanger **72** can be defrosted by the use of heat absorbed by the indoor heat exchanger **62** and the freezer heat exchanger **84** and heat produced by compressing the refrigerant by the compressors **31b, 31c,** and **85.**

Here, Fig. **4** shows the operation using two compressors of the first non-inverter compressor **31b** and the second non-inverter compressor **31c,** but only any one of the compressors may be operated.

### (Heating Operation)

A heating operation is the operation of refrigerating air in the chiller showcase **13** and the freezer showcase **14** and heating the indoor air by the air-conditioning unit **12** to heat the interior of the store.

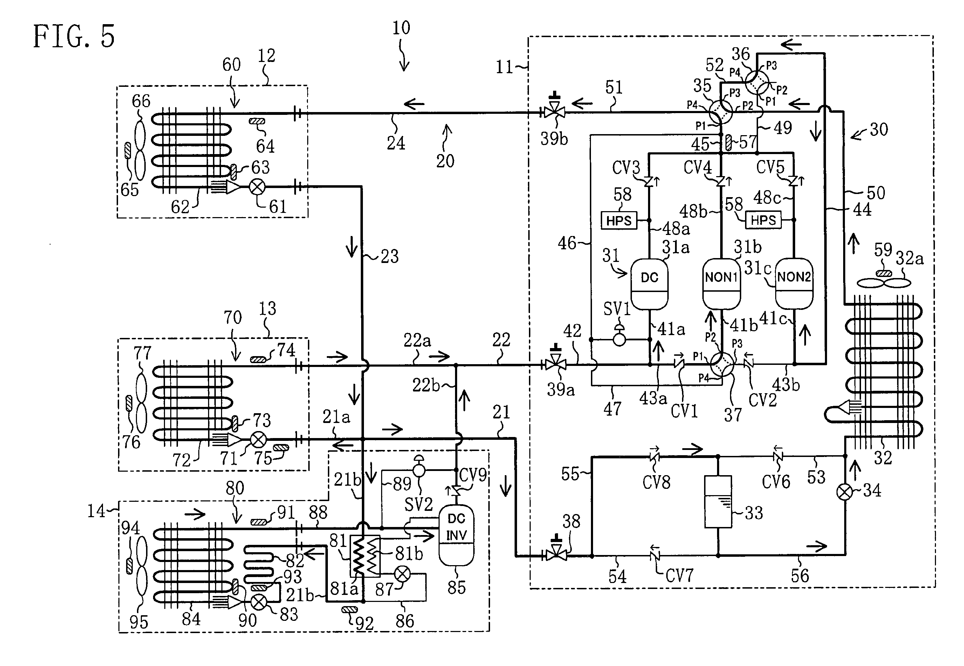

As shown in Fig. **5****,** in the refrigerant circuit **20,** the first four-way switching valve **35** is set to the second state and the second four-way switching valve **36** and the third four-way switching valve **37** are set to the first state, respectively. Moreover, the air-conditioning expansion valve **61** is fully opened, whereas the outdoor expansion valve **34,** the chiller expansion valve **71,** and the freezer expansion valve have their degrees of opening suitably adjusted, and the first solenoid valve **SV1** of the high stage side hot gas passage **46** and the second solenoid valve **SV2** of the low stage side hot gas passage **89** are closed. In this state, the DC inverter compressor **31a,** the first non-inverter compressor **31b,** the second non-inverter compressor **31c,** and the booster compressor **85** are operated.

The refrigerant discharged from the DC inverter compressor **31a,** the first non-inverter compressor **31b,** and the second non-inverter compressor **31c** passes through the high-pressure gas pipe **45,** the first four-way switching valve **35,** the second gas pipe **51,** and the second gas side connection piping **24** and then is introduced into the air-conditioning heat exchanger **62** of the air-conditioning circuit **60.** In the air-conditioning circuit **60,** the refrigerant dissipates heat to the indoor air, thereby being condensed. In the air-conditioning unit **12,** the indoor air heated by the air-conditioning heat exchanger **62** is supplied into the store. The refrigerant condensed in the air-conditioning heat exchanger **62** flows through the second liquid side connection piping **23** and then is distributed to the chiller side branch liquid pipe **21a,** the freezer side branch liquid pipe **21b,** and the first liquid side connection piping **21.**

The refrigerant flowing through the chiller side branch liquid pipe **21a** flows into the chiller showcase **13** and the refrigerant flowing through the freezer side branch liquid pipe **21b** flows into the freezer showcase **14.** In the chiller showcase **13** and the freezer showcase **14,** the airs in the showcases are cooled as is the case with the cooling operation. The refrigerant evaporated in the chiller heat exchanger **72** and the refrigerant evaporated in the freezer heat exchanger **84** and then compressed by the booster compressor 85 merge with each other in the first gas side connection piping **22.** The refrigerant flowing through the first gas side connection piping **22** is distributed to the first suction pipe **41a** and the second suction pipe **41b.** Then, the distributed refrigerants are sucked and compressed by the first non-inverter compressor **31b** and the second non-inverter compressor **31c,** respectively.

The refrigerant flowing through the first liquid side connection piping **21** flows into the receiver **33** from the third liquid pipe **55** and flows through the fourth liquid pipe **56** and has its pressure reduced by the outdoor expansion valve **34.** The refrigerant having the pressure reduced by the outdoor expansion valve **34** is introduced into the outdoor heat exchanger **32** and there absorbs heat from the outdoor air, thereby being evaporated. The refrigerant evaporated by the outdoor heat exchanger **32** passes through the first four-way switching valve **35** and the second four-way switching valve **36** and then passes through the second low-pressure gas pipe **44** and the third suction pipe **41c** and then is sucked and compressed by the second non-inverter compressor **31c.**

In this manner, at the time of the heating operation, the refrigerant absorbs heat in the chiller heat exchanger **72,** the freezer heat exchanger **84,** and the outdoor heat exchanger **32,** and dissipates heat in the air-conditioning heat exchanger **62.** The store is heated by the use of heat that the refrigerant absorbs from the air in the chiller showcase **13** and the freezer showcase **14** in the chiller heat exchanger **72** and the freezer heat exchanger **84** and heat that the refrigerant absorbs from the outside air at the outdoor heat exchanger **32.**

In this regard, when a heating capacity becomes excessive in the heating operation of using the outdoor heat exchanger **32** as an evaporator, it is recommended to stop the second non-inverter compressor **31c** and to close the outdoor expansion valve **34** in the state shown in Fig. **5** and to perform the heating operation in a state where the refrigerant absorbs heat in the chiller heat exchanger **72** and in the freezer heat exchanger **84** and dissipates heat in the air-conditioning heat exchanger **62.**

Moreover, when the heating capacity still becomes excessive, it is recommended to perform the heating operation of using the outdoor heat exchanger **32** as an evaporator and dissipating excessive heat to the outside of the room by switching the second four-way switching valve **36** to the second state and by switching the outdoor expansion valve **34** to a fully opened state (at this time, by stopping the second non-inverter compressor **31c).**

### (Defrosting Operation at the time of the Heating Operation)

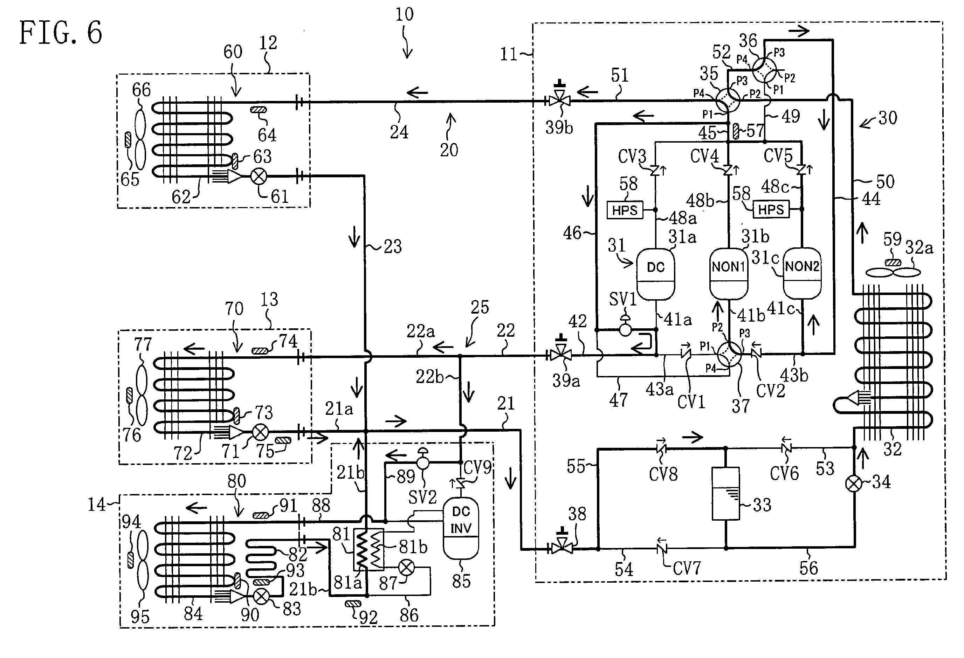

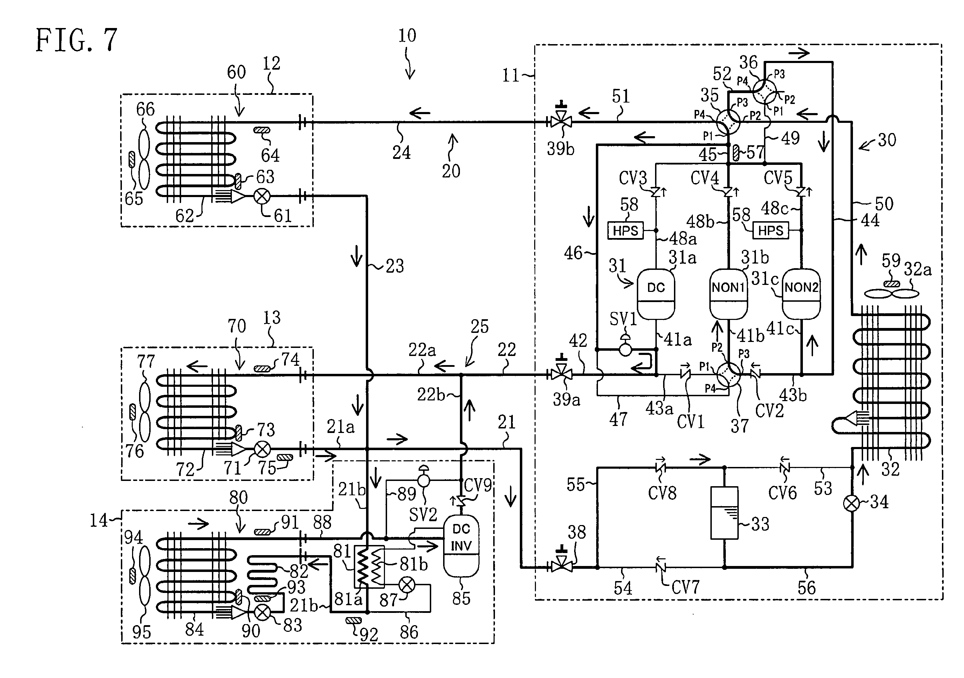

As for a defrosting operation at the time of the heating operation, a defrosting operation shown in Fig. **6** in which the chiller heat exchanger **72** and the freezer heat exchanger **84** are defrosted at the same time and a defrosting operation shown in Fig. **7** in which the chiller heat exchanger **72** is defrosted while the freezer heat exchanger **84** performs a freezing operation can be performed.

First, the defrosting operation shown in Fig. **6** will be described.

As shown in Fig. **6****,** in the refrigerant circuit **20,** the first four-way switching valve **35** and the third four-way switching valve **37** are set to the second state and the second four-way switching valve **36** is set to the first state. Moreover, the air-conditioning expansion valve **61,** the chiller expansion valve **71,** and the freezer expansion valve **83** are fully opened, whereas the outdoor expansion valve **34** has its degree of opening suitably adjusted. The first solenoid valve **SV1** of the high stage side hot gas passage **46** and the second solenoid valve **SV2** of the low stage side hot gas passage **89** are opened. In this state, the first non-inverter compressor **31b** and the second non-inverter compressor **31c** are operated.

The refrigerant discharged from the first non-inverter compressor **31b** and the refrigerant discharged from the second non-inverter compressor **31c** pass through the respective discharge pipes **48b, 48c** and merge with each other in the high-pressure pipe **45.** The refrigerant after merging passes through the first four-way switching valve **35,** the second gas pipe **51,** and the second gas side connection piping **24** and is introduced into the outdoor heat exchanger **32** of the air-conditioning circuit **60** where the refrigerant dissipates heat to the indoor air, thereby being condensed. In the air-conditioning unit **12,** the indoor air heated by the air-conditioning heat exchanger **62** is supplied into the store. The refrigerant condensed in the air-conditioning heat exchanger **62** flows through the second liquid side connection piping **23** and then flows into the first liquid side connection piping **21.**

On the other hand, part of the refrigerant discharged from the first non-inverter compressor **31b** and the second non-inverter compressor **31c** flows through the high stage side hot gas passage **46,** the first low-pressure gas pipe **42,** and the first gas side connection piping **22** and then are distributed to the chiller side branch gas pipe **22a** and the freezer side branch gas pipe **22b.**

The refrigerant flowing through the chiller side branch gas pipe **22a** flows into the chiller heat exchanger **72.** In chiller heat exchanger **72,** the refrigerant dissipates heat to the air in the chiller showcase **13,** thereby being condensed. At that time, frost adhering to the chiller heat exchanger **72** is melted. The refrigerant condensed in the chiller heat exchanger **72** passes through the chiller expansion valve **71** and flows through the chiller side branch liquid pipe **21a** and then flows into the first liquid side connection piping **21** and then merges with the refrigerant from the air-conditioning unit **12.**

The refrigerant flowing through the freezer side branch gas pipe **22b** passes through the low stage side hot gas passage **89** and flows into the freezer heat exchanger **84.** In the freezer heat exchanger **84,** the refrigerant dissipates heat to the air in the freezer showcase **14,** thereby being condensed. At that time, frost adhering to the freezer heat exchanger **84** is melted. The refrigerant condensed in the freezer heat exchanger **84** passes through the freezer expansion valve **83,** the drain pan heater **82,** the refrigerant heat exchanger **81,** and flows through the freezer side branch liquid pipe **21b** and then flows into the first liquid side connection piping **21** and then merges with the refrigerant from the air-conditioning unit **12.**

The refrigerant flowing through the first liquid side connection piping **21** flows into the receiver **33** from the third liquid pipe **55** and flows through the fourth liquid pipe **56** and has its pressure reduced by the outdoor expansion valve **34.** The refrigerant having the pressure reduced by the outdoor expansion valve **34** is introduced into the outdoor heat exchanger **32** and there absorbs heat from the outdoor air, thereby being evaporated. The refrigerant evaporated in the outdoor heat exchanger **32** passes through the first four-way switching valve **35,** the second four-way switching valve **36,** the second low-pressure gas pipe **44,** the second suction pipe **41b,** and the third suction pipe **41c,** and then is sucked and compressed by the first non-inverter compressor **31b** and the second non-inverter compressor **31c.**

As described above, in the defrosting operation shown in Fig. **6****,** the chiller heat exchanger **72** and the freezer heat exchanger **84** can be defrosted at the same time by the use of heat absorbed by the outdoor heat exchanger **32** and heat produced by compressing the refrigerant by the first and second non-inverter compressors **31b, 31c.**

Here, Fig. **6** shows the operation using two compressors of the first non-inverter compressor **31b** and the second non-inverter compressor **31c,** but only any one of the compressors may be operated.

Moreover, in the case of defrosting only the freezer heat exchanger **84,** it suffices to perform an operation in which the chiller expansion valve **71** is closed to prevent the refrigerant from flowing through the chiller showcase **13** in the operation state shown in Fig. **3****.**

Next, the defrosting operation shown in Fig. **7** will be described.

As shown in Fig. **7****,** in the refrigerant circuit **20,** the first four-way switching valve **35** and the third four-way switching valve **37** are set to the second state and the second four-way switching valve **36** is set to the first state. Moreover, the air-conditioning expansion valve **61** and the chiller expansion valve **71** are fully opened, whereas the freezer expansion valve **83** and the outdoor expansion valve **34** have their degrees of opening suitably adjusted. The first solenoid valve **SV1** of the high stage side hot gas passage **46** is opened and the second solenoid valve **SV2** of the low stage side hot gas passage **89** is closed. In this state, the first non-inverter compressor **31b,** the second non-inverter compressor **31c,** and the booster compressor **85** are operated.

The refrigerant discharged from the first non-inverter compressor **31b** and the refrigerant discharged from the second non-inverter compressor **31c** pass through the respective discharge pipes **48b, 48c** and merge with each other in the high-pressure pipe **45.** The refrigerant after merging passes through the first four-way switching valve **35,** the second gas pipe **51,** and the second gas side connection piping **24** and is introduced into the outdoor heat exchanger **32** where the refrigerant dissipates heat to the indoor air, thereby being condensed. In the air-conditioning unit **12,** the indoor air heated by the air-conditioning heat exchanger **62** is supplied into the store. The refrigerant condensed in the air-conditioning heat exchanger **62** flows through the second liquid side connection piping **23** and then is distributed to the freezer side branch liquid pipe **21b** and the first liquid side connection piping **21.**

The refrigerant flowing into the freezer circuit **80** from the freezer side branch liquid pipe **21b** passes through the refrigerant heat exchanger **81** and the drain pan heater **82.** When the refrigerant passes through the freezer expansion valve **83,** the refrigerant has its pressure reduced and then is introduced into the freezer heat exchanger **84.** In the freezer heat exchanger **84,** the refrigerant absorbs heat from the air in the freezer showcase **14,** thereby being evaporated. At that time, in the freezer heat exchanger **84,** the evaporation temperature of the refrigerant is set to about -30°C, for example. In the freezer showcase **14,** the air in the freezer showcase **14** cooled by the freezer heat exchanger **84** is supplied into the freezer showcase **14,** whereby the temperature in the freezer showcase **14** is kept at about -20°C, for example.

The refrigerant evaporated by the freezer heat exchanger **84** passes through the suction pipe **88** and then is sucked by the booster compressor **85.** The refrigerant compressed by the booster compressor **85** passes through the discharge pipe **98** and the freezer side branch gas pipe **22b** and then flows into the first gas side connection piping **22.** At this time, the electronic expansion valve **87** disposed in the branch pipe **86** has the degree of opening controlled and performs the function of an economizer. For this reason, the discharge pressure of the booster compressor **85** is increased to a level nearly equal to the discharge pressure of the first non-inverter compressor **31b** and the second non-inverter compressor **31c.**

On the other hand, part of the refrigerant discharged from the first non-inverter compressor **31b** and the second non-inverter compressor **31c** flows through the high stage side hot gas passage **46,** the first low-pressure gas pipe **42,** and the first gas side connection piping **22** and then merges with the refrigerant from the freezer unit **14** and then flows through the chiller side branch gas pipe **22a.**

The refrigerant flowing through the chiller side branch gas pipe **22a** flows into the chiller heat exchanger **72.** In the chiller heat exchanger **72,** the refrigerant dissipates heat to the air in the chiller showcase **13,** thereby being condensed. At that time, frost adhering to the chiller heat exchanger **72** is melted. The refrigerant condensed in the chiller heat exchanger **72** passes through the chiller expansion valve **71** and flows through the chiller side branch liquid pipe **21a.** Then, the refrigerant and is distributed, together with the refrigerant from the air-conditioning unit **12,** to the freezer side branch liquid pipe **21b** and the first liquid side connection piping **21.**

The refrigerant flowing through the first liquid side connection piping **21** flows into the receiver **33** from the third liquid pipe **55** and flows through the fourth liquid pipe **56** and has it pressure reduced by the outdoor expansion valve **34.** The refrigerant having its pressure reduced by the outdoor expansion valve **34** is introduced into the outdoor heat exchanger **32.** In the outdoor heat exchanger **32,** the refrigerant absorbs heat from the outdoor air, thereby being evaporated. The refrigerant evaporated in the outdoor heat exchanger **32** passes through the first four-way switching valve **35,** the second four-way switching valve **36,** the second low-pressure gas pipe **44,** the second suction pipe **41b,** and the third suction pipe **41c,** and then is sucked and compressed by the first non-inverter compressor **31b** and the second non-inverter compressor **31c.**

As described above, in the defrosting operation shown in Fig. **7****,** the chiller heat exchanger **72** can be defrosted by the use of heat absorbed by the outdoor heat exchanger **32** and the freezer heat exchanger **84** and heat produced by compressing the refrigerant by the compressors **31b, 31c.**

Here, Fig. 7 shows the operation using two compressors of the first non-inverter compressor **31b** and the second non-inverter compressor **31c,** but only any one of the compressors may be operated.

### - Effect of Embodiment 1 -

According to the refrigeration system **10** of this embodiment, even if a defrosting mechanism such as an electric heater is not provided in addition to the refrigerant circuit, both of the chiller heat exchanger **72** and the freezer heat exchanger **84** can be defrosted, so it is possible to prevent the construction of the refrigeration system from becoming complex. Moreover, it is possible not only to defrost both of the chiller heat exchanger **72** and the freezer heat exchanger **84** at the same time but also to defrost only one of them. In this manner, the refrigeration system **10** of this embodiment can defrost the chiller heat exchanger **72** and the freezer heat exchanger **84** individually and hence can respond to a variety of patterns of the defrosting operations.

Further, in a refrigeration system of the related art in which a freezer heat exchanger is defrosted by using a chiller heat exchanger as a heat source, it is necessary to bring the chiller heat exchanger and the freezer heat exchanger into a good balance between heat absorption and heat dissipation at the time of the defrosting operation. This presents the problem of imposing a restriction on design. On the other hand, the refrigeration system **10** of this embodiment does not impose such a restriction on design.

Still further, the chiller heat exchanger **72** and the freezer heat exchanger **84** can be defrosted by the use of the heat absorbed by the air-conditioning heat exchanger **62,** the heat absorbed by the outdoor heat exchanger **32,** and the heat produced by compressing the refrigerant by the compression mechanism **31,** so the defrosting operation can be performed efficiently.

Still further, when the frost adhering to the chiller heat exchanger **72** and the freezer heat exchanger **84** is melted from outside by the use of an electric heater, the temperature in the refrigerator is easily increased. However, in this embodiment, the frost adhering to the chiller heat exchanger **72** and the freezer heat exchanger **84** is melted from inside by the use of heat of the refrigerant, so an increase in the temperature in the refrigerator can be prevented.

Still further, in the construction in which only the operating pattern of defrosting the chiller heat exchanger **72** and the freezer heat exchanger **84** at the same time can be performed, when hot gas continues flowing through the heat exchanger defrosted earlier, the temperature in the refrigerator is increased. However, in this embodiment, the respective heat exchangers **72, 84** can be defrosted individually, so when one of the heat exchangers **72, 84** is defrosted earlier, by stopping flowing the hot gas through the heat exchanger, an increase in the temperature in the refrigerator can be prevented with reliability.

Still further, while only the chiller heat exchanger **72** is defrosted, the function of the economizer is performed in the freezer showcase **14** to increase the discharge pressure of the booster compressor **85.** When the function of the economizer is not used, a comparatively large pressure difference is developed between the discharge pressure of the compression mechanism **31** of the outdoor unit **11** and the discharge pressure of the booster compressor **85,** which raises a possibility that the booster compressor **85** might be damaged. However, the use of the function of the economizer can prevent such a problem.

In this embodiment, the description of the detailed flow of the refrigerant in the refrigerant circuit **20** has been omitted, but it is also possible to perform only the chilling/freezing operation without performing the air-conditioning operation and to perform only the air-conditioning operation without performing the chilling/freezing operation.

### (Embodiment 2 of the Invention)

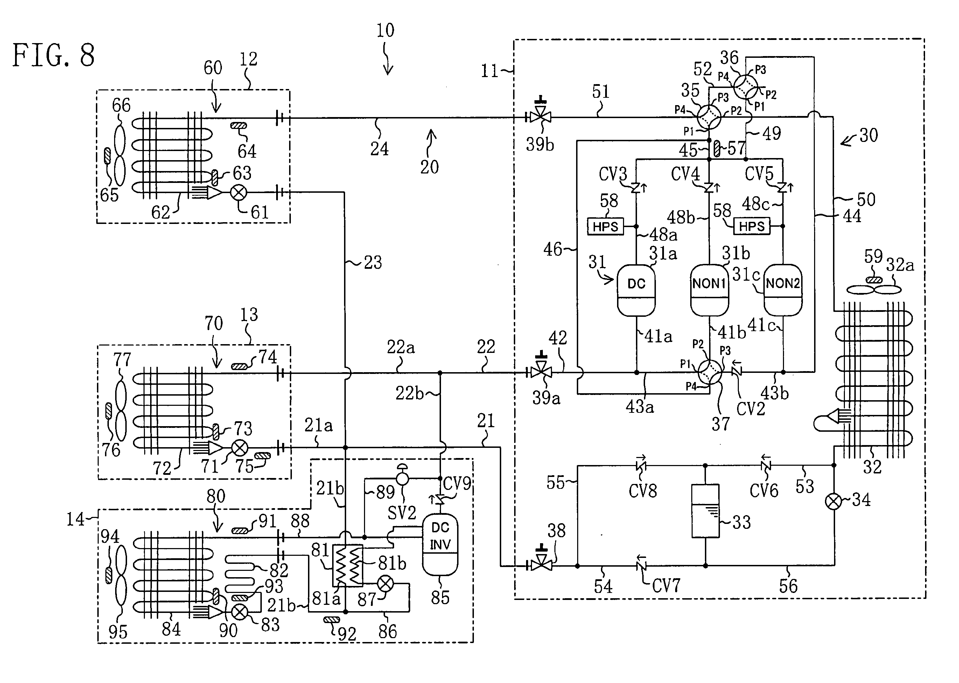

A refrigeration system **10** of an embodiment 2, as shown in Fig. **8****,** is an embodiment that is different from the embodiment 1 in the construction of a part of the outdoor unit **11.** Specifically, the embodiment 2 is different from the embodiment 1 in the construction relating to the high stage side hot gas passage **46.** The hot gas introduction passage **46** of the embodiment 2 has its one end connected to the high-pressure gas pipe **45** and has the other end connected to the fourth port **P4** of the third four-way switching valve **37.** Moreover, the check valve **CV1** disposed in the first connection pipe **43a** in the embodiment 1 is not disposed in the embodiment 2.

The other construction of the embodiment 2 is the same as that of the embodiment 1.

### - Operation -

In this embodiment 2, the cooling operation and the heating operation can be also performed in the same way as in the embodiment 1, and two or one of the chiller heat exchanger **72** and the freezer heat exchanger **84** can be defrosted at the time of the cooling operation or the heating operation.

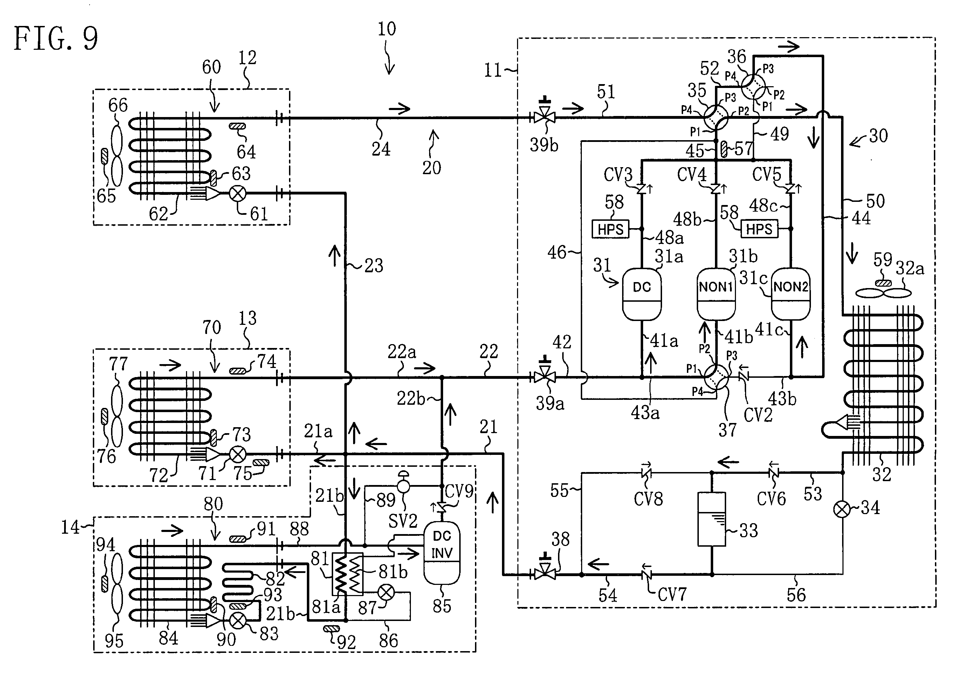

At the time of the cooling operation, as shown in Fig. **9****,** the first four-way switching valve **35,** the second four-way switching valve **36,** and the third four-way switching valve **37** are set to the first state, respectively. Moreover, the outdoor expansion valve **34** is totally closed whereas the air-conditioning expansion valve **61,** the chiller expansion valve **71,** and the freezer expansion valve **83** have their degrees of opening suitably adjusted and the second solenoid valve **SV2** of the low stage side hot gas passage **89** is closed. In this state, the DC inverter compressor **31a,** the first non-inverter compressor **31b,** the second non-inverter compressor **31c,** and the booster compressor 85 are actuated.

The refrigerant circulates through the refrigerant circuit **10** in the same state as shown in Fig. **2****.** A refrigeration cycle is performed in which the outdoor heat exchanger **32** is used as a condenser and in which the air-conditioning heat exchanger **62,** the chiller heat exchanger **72,** and the freezer heat exchanger **84** are used as evaporators.

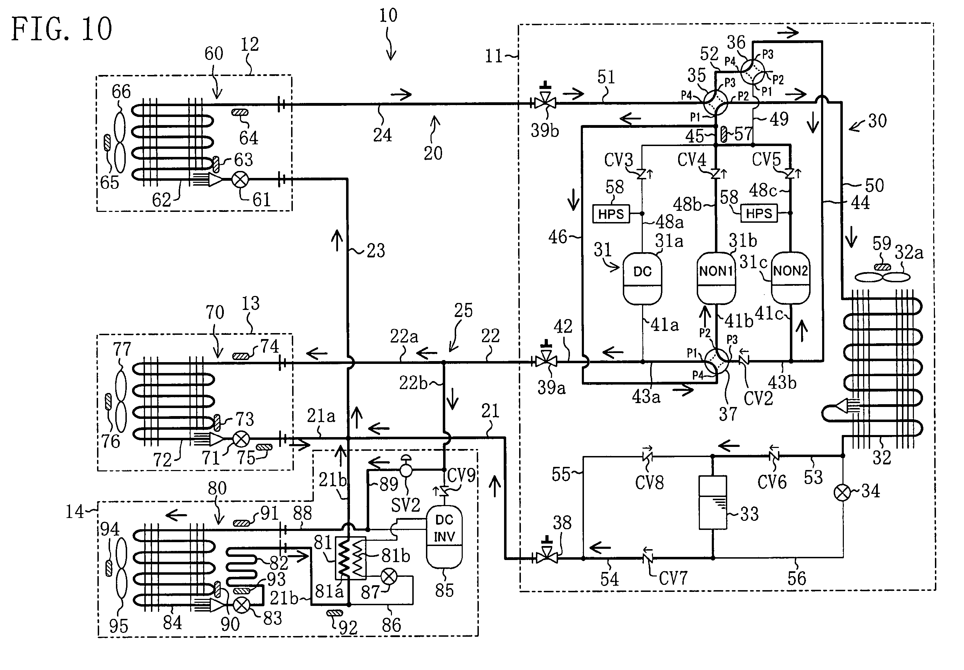

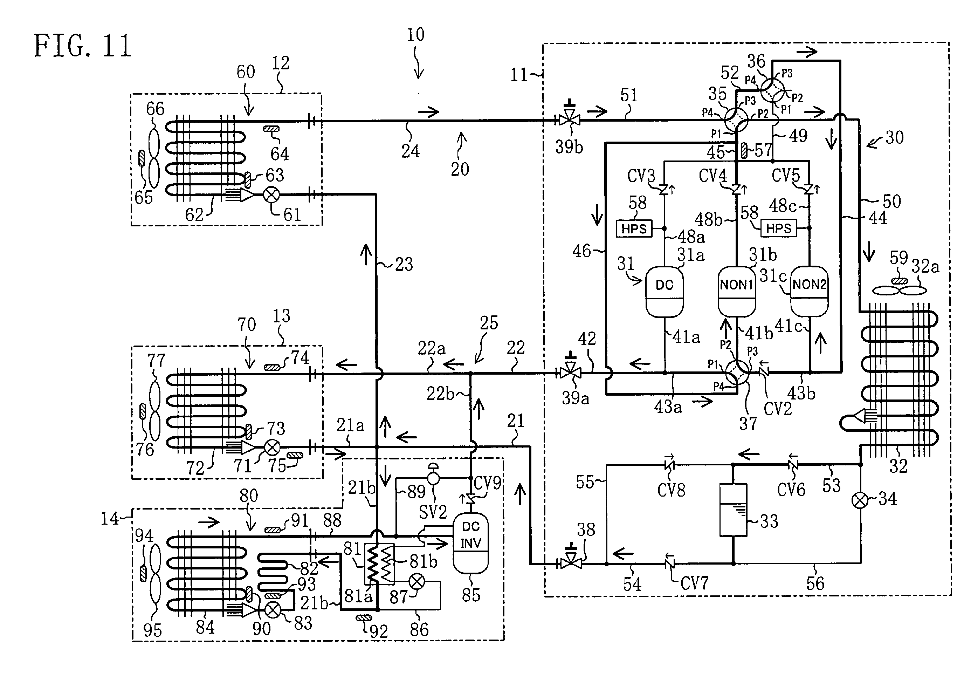

As for the defrosting operation at the time of the cooling operation, the defrosting operation shown in Fig. **10** in which the chiller heat exchanger **72** and the freezer heat exchanger **84** are defrosted at the same time and the defrosting operation shown in Fig. **11** in which the chiller heat exchanger **72** is defrosted while the freezer heat exchanger **84** performs the cooling operation can be performed.

At the time of the defrosting operation shown in Fig. **10****,** the first four-way switching valve **35** and the second four-way switching valve **36** are set to the first state and the third four-way switching valve **37** is set to the second state. Moreover, the outdoor expansion valve **34** is totally closed and the chiller expansion valve **71** and the freezer expansion valve **83** are fully opened, whereas the air-conditioning expansion valve **61** has its degree of opening suitably adjusted. The second solenoid valve **SV2** of the low stage side hot gas passage **89** is opened. In this state, the first non-inverter compressor **31b** and the second non-inverter compressor **31c** are operated.

The refrigerant circulates through the refrigerant circuit **10** in the same state as shown in Fig. **3** except that part of the refrigerant discharged from the compression mechanism **31** of the outdoor unit **10** flows through the high stage side hot gas passage **46,** the third four-way switching valve **37,** and the first low-pressure gas pipe **42** to the chiller showcase **13** and the freezer showcase **14.** A refrigeration cycle is performed in which the outdoor heat exchanger **32,** the chiller heat exchanger **72,** and the freezer heat exchanger **84** are used as condensers and in which the air-conditioning heat exchanger **62** is used as an evaporator.

At the time of the defrosting operation shown in Fig. **11****,** the first four-way switching valve **35** and the second four-way switching valve **36** are set to the first state and the third four-way switching valve **37** is set to the second state. Moreover, the outdoor expansion valve **34** is totally closed and the chiller expansion valve **71** is fully opened, whereas the freezer expansion valve **83** and the air-conditioning expansion valve **61** have their degrees of opening suitably adjusted. The second solenoid valve **SV2** of the low stage side hot gas passage **89** is closed. In this state, the first non-inverter compressor 31b, the second non-inverter compressor **31c,** and the booster compressor **85** are operated.

The refrigerant circulates through the refrigerant circuit **10** in the same state as shown in Fig. **4** except that part of the refrigerant discharged from the compression mechanism **31** of the outdoor unit **10** flows through the high stage side hot gas passage **46,** the third four-way switching valve **37,** and the first low-pressure gas pipe **42** to the chiller showcase **13.** A refrigeration cycle is performed in which the outdoor heat exchanger **32** and the chiller heat exchanger **72** are used as condensers and in which the air-conditioning heat exchanger **62** and the freezer heat exchanger **84** are used as evaporators.

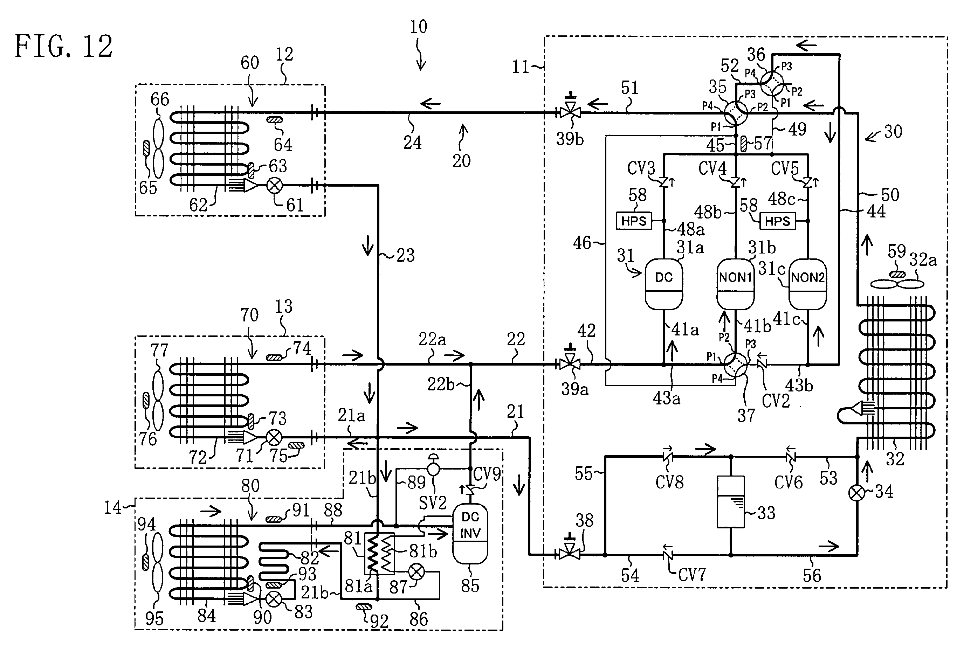

At the time of the heating operation, as shown in Fig. **12****,** the first four-way switching valve **35** is set to the second state and the second four-way switching valve **36** and the third four-way switching valve **37** are set to the first state, respectively. Moreover, the air-conditioning expansion valve **61** is fully opened whereas the outdoor expansion valve **34,** the chiller expansion valve **71,** and the freezer expansion valve **83** have their degrees of opening suitably adjusted. The second solenoid valve **SV2** of the low stage side hot gas passage **89** is closed. In this state, the DC inverter compressor **31a,** the first non-inverter compressor **31b,** the second non-inverter compressor **31c,** and the booster compressor **85** are operated.

The refrigerant circulates through the refrigerant circuit **10** in the same state as shown in Fig. **5****.** A refrigeration cycle is performed in which the air-conditioning heat exchanger **62** is used as a condenser and in which the outdoor heat exchanger **32,** the chiller heat exchanger **72,** and the freezer heat exchanger **84** are used as evaporators.

In this regard, when a heating capacity becomes excessive in the heating operation of using the outdoor heat exchanger **32** as an evaporator, it is recommended to stop the second non-inverter compressor **31c** and to close the outdoor expansion valve **34** in the state shown in Fig. **12** and to perform the heating operation in a state where the refrigerant absorbs heat in the chiller heat exchanger **72** and in the freezer heat exchanger **84** and dissipates heat in the air-conditioning heat exchanger **62.**

Moreover, when the heating capacity still becomes excessive, it is recommended to perform the heating operation of using the outdoor heat exchanger **32** as an evaporator and dissipating excessive heat to the outside of the room by switching the second four-way switching valve **36** to the second state and by switching the outdoor expansion valve **34** to a fully opened state (at this time, by stopping the second non-inverter compressor **31c**).

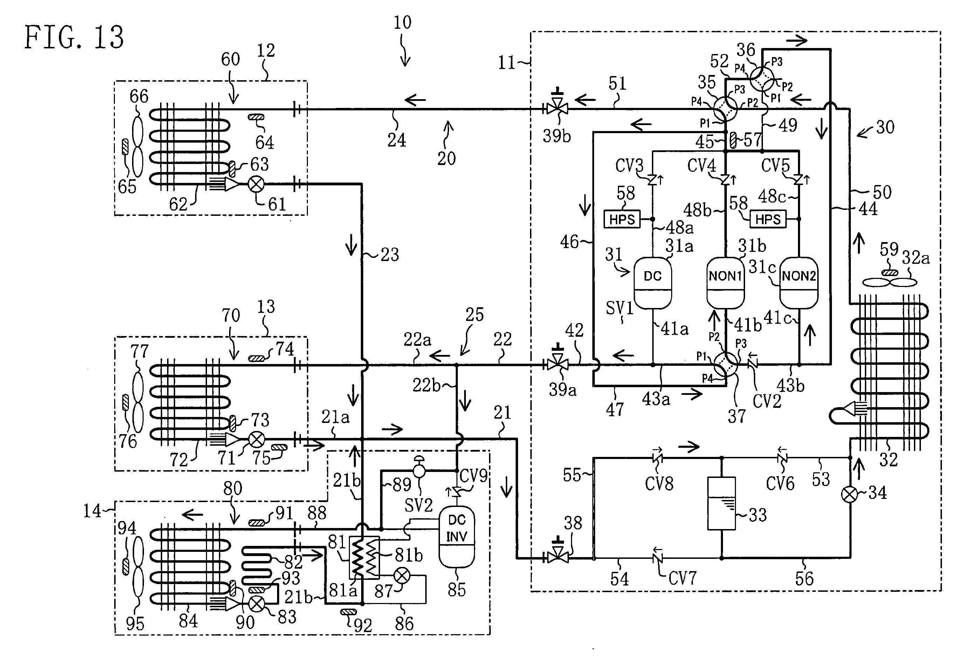

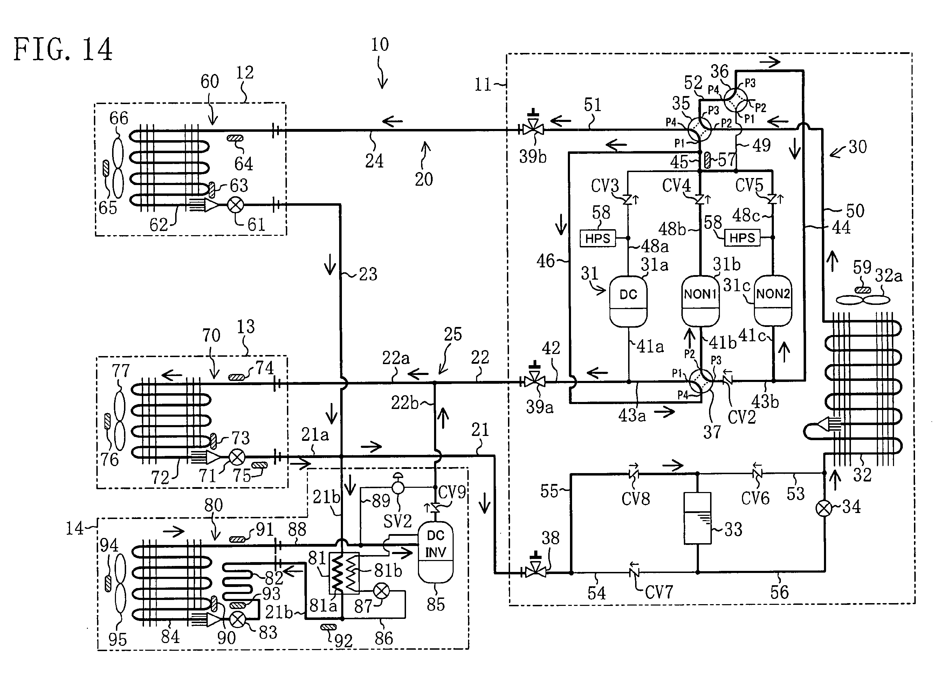

As for the defrosting operation at the time of the heating operation, the defrosting operation shown in Fig. **13** in which the chiller heat exchanger **72** and the freezer heat exchanger **84** are defrosted at the same time and the defrosting operation shown in Fig. **14** in which the chiller heat exchanger **72** is defrosted while the freezer heat exchanger **84** performs the cooling operation can be performed.

At the time of the defrosting operation shown in Fig. **13****,** the first four-way switching valve **35** and the third four-way switching valve **37** are set to the second state and the second four-way switching valve **36** is set to the first state. Moreover, the air-conditioning expansion valve **61,** the chiller expansion valve **71,** and the freezer expansion valve **83** are fully opened, whereas the outdoor expansion valve **34** has its degree of opening suitably adjusted. The second solenoid valve **SV2** of the low stage side hot gas passage **89** is opened. In this state, the first non-inverter compressor **31b** and the second non-inverter compressor **31c** are operated.

The refrigerant circulates through the refrigerant circuit **10** in the same state as shown in Fig. **6** except that part of the refrigerant discharged from the compression mechanism **31** of the outdoor unit **10** flows through the high stage side hot gas passage **46,** the third four-way switching valve **37,** and the first low-pressure gas pipe **42** to the chiller showcase **13** and the freezer showcase **14.** A refrigeration cycle is performed in which the air-conditioning heat exchanger **62,** the chiller heat exchanger **72,** and the freezer heat exchanger **84** are used as condensers and in which the outdoor heat exchanger **32** is used as an evaporator.

At the time of the defrosting operation shown in Fig. **14****,** the first four-way switching valve **35** and the third four-way switching valve **37** are set to the second state and the second four-way switching valve **36** is set to the first state. Moreover, the air-conditioning expansion valve **61** and the chiller expansion valve **71** are fully opened, whereas the freezer expansion valve **83** and the outdoor expansion valve **34** have their degrees of opening suitably adjusted. The second solenoid valve **SV2** of the low stage side hot gas passage **89** is closed. In this state, the first non-inverter compressor **31b,** the second non-inverter compressor **31c,** and the booster compressor **85** are operated.

The refrigerant circulates through the refrigerant circuit **10** in the same state as shown in Fig. **7** except that part of the refrigerant discharged from the compression mechanism **31** of the outdoor unit **10** flows through the high stage side hot gas passage **46,** the third four-way switching valve **37,** and the first low-pressure gas pipe **42** to the chiller showcase **13.** A refrigeration cycle is performed in which the air-conditioning heat exchanger **62** and the chiller heat exchanger **72** are used as condensers and in which the freezer heat exchanger **84** and the outdoor heat exchanger **32** are used as evaporators.

### - Effect of Embodiment 2-

The refrigeration system **10** of this embodiment 2, just as with the embodiment 1, can respond to a variety of patterns of the defrosting operations while preventing the construction of the refrigeration system from becoming complex. Moreover, this embodiment 2 is the same as the embodiment 1 also in that unlike a refrigeration system of the related art in which a freezer heat exchanger is defrosted by using a chiller heat exchanger as a heat source, there is not a restriction in design such that it is necessary to bring the chiller heat exchanger and the freezer heat exchanger into a good balance between heat absorption and heat dissipation at the time of the defrosting operation.

Furthermore, this embodiment 2 is the same as the embodiment 1 also: in that the chiller heat exchanger **72** and the freezer heat exchanger **84** can be defrosted by the use of the heat absorbed by the air-conditioning heat exchanger **62** and the outdoor heat exchanger **32** and the heat produced by compressing the refrigerant by the compression mechanism **31,** so the defrosting operation can be performed efficiently; and in that the frost adhering to the chiller heat exchanger **72** and the freezer heat exchanger **84** can be melted from inside by the heat of the refrigerant without using an electric heater, whereby an increase in the chiller showcase **13** and the freezer showcase **14** can be prevented.

### <<Embodiment 3 of the Invention>>

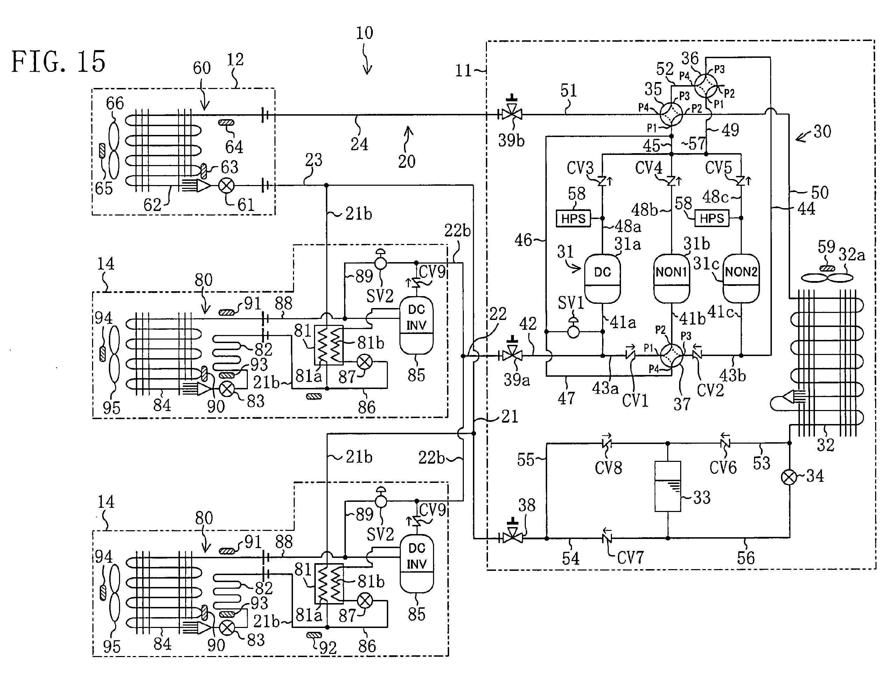

A refrigeration system **10** of an embodiment 3 is an embodiment in which one air-conditioning unit **12** and two freezer units **14** are connected to the outdoor unit **11,** as shown in Fig. **15****,** in place of connecting one air-conditioning unit **12,** one chiller showcase **13,** and one freezer showcase **14** to the outdoor unit **11.** Two freezer showcases **14** are connected in parallel to the outdoor unit **11** via two freezer side branch liquid pipes **21b** branched from the first liquid side connection piping **21** and via two freezer side branch gas pipes **22b** branched from the first gas side connection piping **22.** In other words, in this embodiment 3, two freezer circuits **80** each of which is provided with the freezer heat exchanger **84** and the booster compressor **85** are connected in parallel.

The other construction of the embodiment 3 is the same as that of the embodiment 1.

### - Operation -

This embodiment 3, just as with the embodiments 1 and 2, can also perform the cooling operation and the heating operation and can defrost two or one of the freezer heat exchangers **84** at the time of the cooling operation and the heating operation.

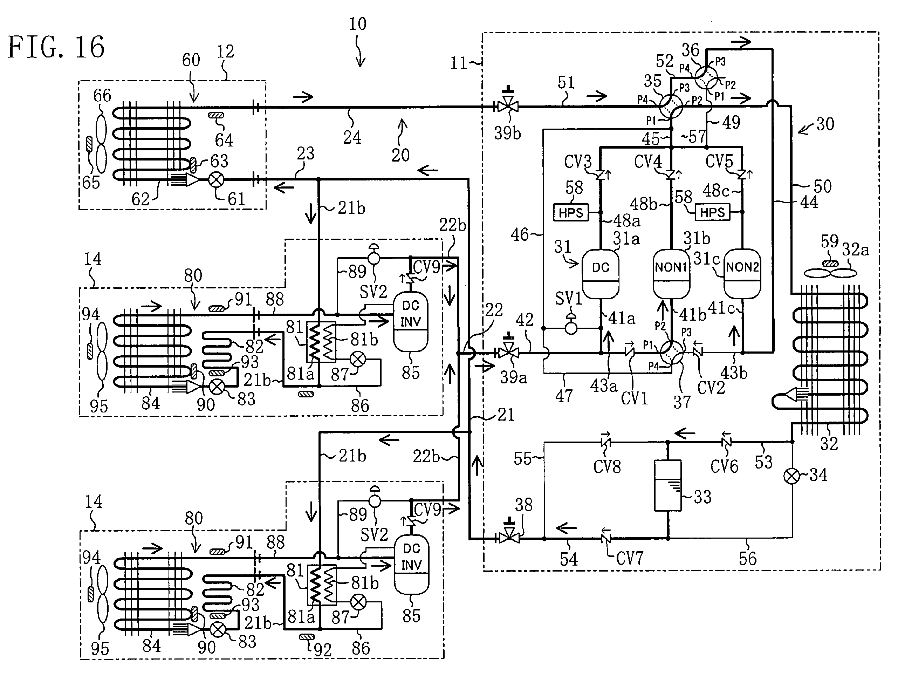

At the time of the cooling operation, as shown in Fig. **16****,** the first four-way switching valve **35,** the second four-way switching valve **36,** and the third four-way switching valve **37** are set to the first state, respectively. Moreover, the outdoor expansion valve **34** is totally closed, whereas the air-conditioning expansion valve **61,** and each freezer expansion valve **83** have their degrees of opening suitably adjusted and the second solenoid valve **SV2** of the low stage side hot gas passage **89** is closed. In this state, the DC inverter compressor **31a,** the first non-inverter compressor **31b,** the second non-inverter compressor **31c,** and the booster compressor **85** are actuated.

The refrigerant circulates through the refrigerant circuit **10** in the nearly same state as shown in Fig. **2****.** A refrigeration cycle is performed in which the outdoor heat exchanger **32** is used as a condenser and in which the air-conditioning heat exchanger **62** and the respective freezer heat exchangers **84** are used as evaporators.

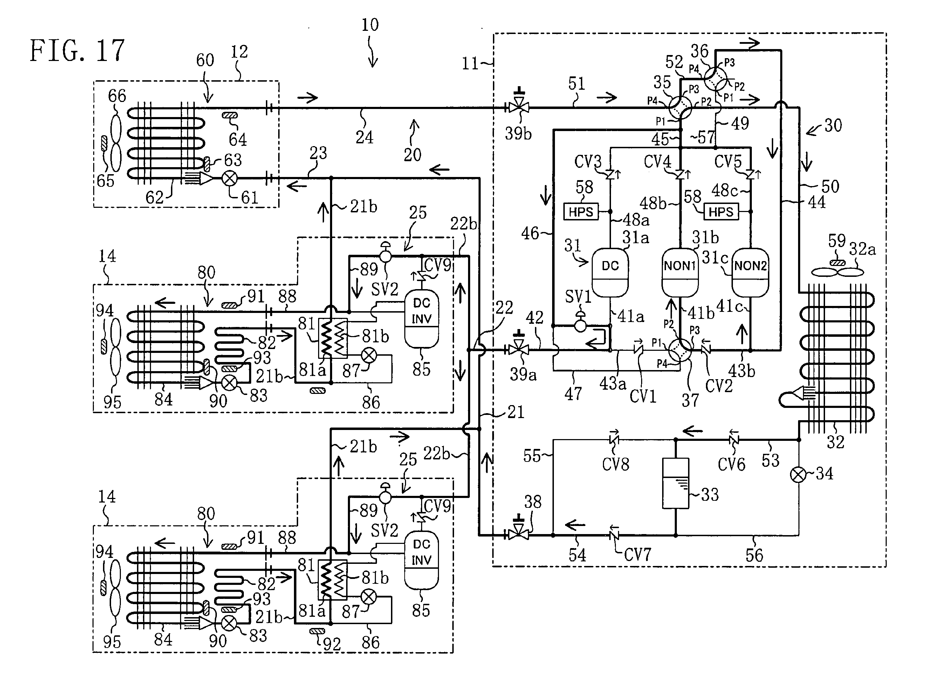

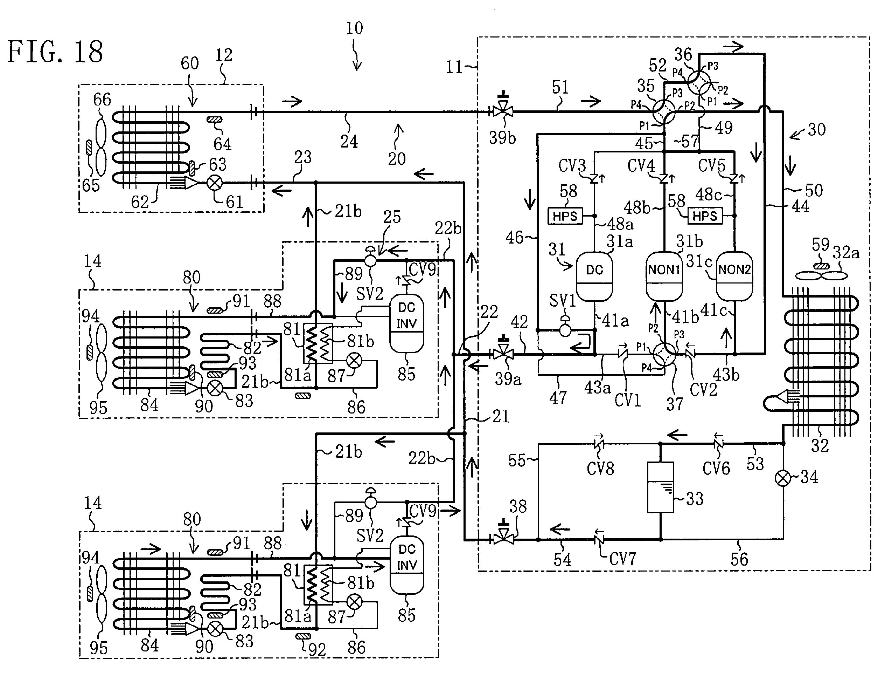

As for the defrosting operation at the time of the cooling operation, the defrosting operation shown in Fig. **17** in which two freezer heat exchangers **84** are defrosted at the same time and the defrosting operation shown in Fig. **18** in which one freezer heat exchanger **84** is defrosted while the other freezer heat exchanger **84** performs the refrigerating operation can be performed.

At the time of the defrosting operation shown in Fig. **17****,** the first four-way switching valve **35** and the second four-way switching valve **36** are set to the first state and the third four-way switching valve **37** is set to the second state. Moreover, the outdoor expansion valve **34** is totally closed and the respective freezer expansion valves **83** are fully opened, whereas the air-conditioning expansion valve **61** has its degree of opening suitably adjusted. The first solenoid valve **SV1** of the high stage side hot gas passage **46** and the second solenoid valves **SV2** of the respective low stage side hot gas passages **89** are opened. In this state, the first non-inverter compressor **31b** and the second non-inverter compressor **31c** are operated.

The refrigerant circulates through the refrigerant circuit **10** in the same state as shown in Fig. **3** except that part of the refrigerant discharged from the compression mechanism **31** of the outdoor unit **10** flows through the high stage side hot gas passage **46** and the first low-pressure gas pipe **42** and then is branched to two freezer side branch gas pipes **22b** and that the branched refrigerants then flow to the respective freezer showcases **14.** A refrigeration cycle is performed in which the outdoor heat exchanger **32,** the respective freezer heat exchangers **84** are used as condensers and in which the air-conditioning heat exchanger **62** is used as an evaporator.

The defrosting operation shown in Fig. **18** is an embodiment in which the freezer showcase **14** shown on the upper side in the drawing performs the defrosting operation. In the following description, this freezer showcase **14** is referred to as a defrosting side showcase and the freezer showcase **14** shown on the lower side in the drawing is referred to as a refrigerating side showcase.

In Fig. **18****,** the first four-way switching valve **35** and the second four-way switching valve **36** are set to the first state and the third four-way switching valve **37** is set to the second state. Moreover, the outdoor expansion valve **34** is totally closed, whereas the freezer expansion valve **83** of the refrigerating side showcase and the air-conditioning expansion valve **61** have their degrees of opening suitably adjusted and the freezer expansion valve **83** of the defrosting side showcase is fully opened. The first solenoid valve **SV1** of the high stage side hot gas passage **46** is opened and the second solenoid valve **SV2** of the low stage side hot gas passage **89** of the defrosting side showcase is opened and the second solenoid valve **SV2** of the low stage side hot gas passage **89** of the refrigerating side showcase is closed. In this state, the first non-inverter compressor **31b,** the second non-inverter compressor **31c,** and the booster compressor **85** of the refrigerating side showcase are operated.

The refrigerant circulates through the refrigerant circuit **10** in the same state as shown in Fig. **4** except that part of the refrigerant discharged from the compression mechanism **31** of the outdoor unit **10** flows through the high stage side hot gas passage **46** and the first low-pressure gas pipe **42** to freezer heat exchanger **84** of the defrosting side showcase. A refrigeration cycle is performed in which the outdoor heat exchanger **32** and the freezer heat exchanger **84** of the defrosting side showcase are used as condensers and in which the air-conditioning heat exchanger **62** and the freezer heat exchanger **84** of the refrigerating side showcase are used as evaporators.

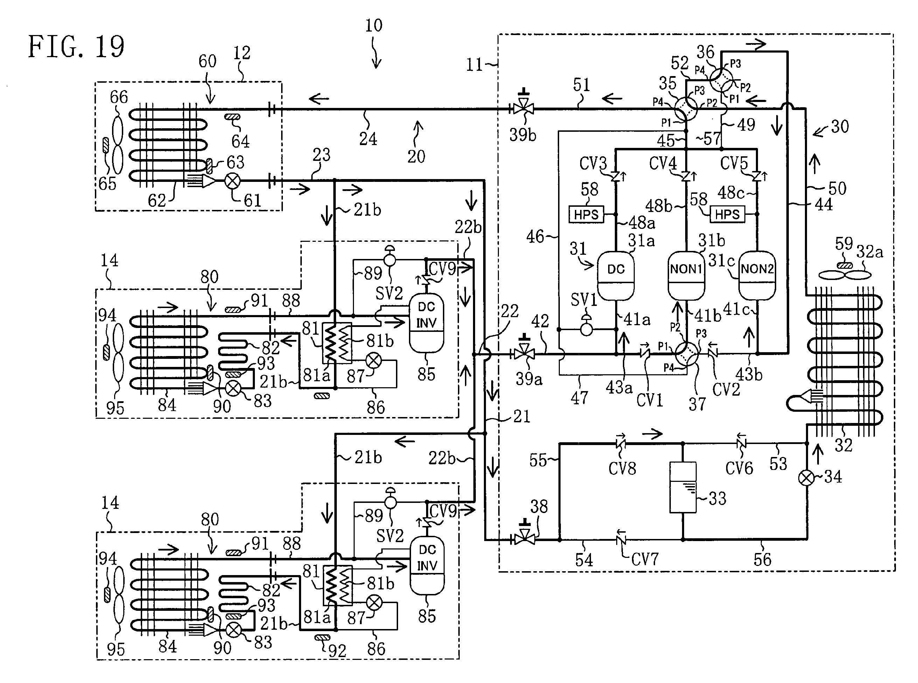

At the time of the heating operation, as shown in Fig. **19****,** the first four-way switching valve **35** is set to the second state and the second four-way switching valve **36** and the third four-way switching valve **37** are set to the first state, respectively. Moreover, the air-conditioning expansion valve **61** is fully opened whereas the outdoor expansion valve **34** and the respective freezer expansion valves **83** have their degrees of opening suitably adjusted. The first solenoid valve **SV1** of the high stage side hot gas passage **46** and the second solenoid valve **SV2** of the low stage side hot gas passage **89** are closed. In this state, the DC inverter compressor **31a,** the first non-inverter compressor **31b,** the second non-inverter compressor **31c,** and the respective booster compressors **85** are operated.

The refrigerant circulates through the refrigerant circuit **10** in the nearly same state as shown in Fig. **5****.** A refrigeration cycle is performed in which the air-conditioning heat exchanger **62** is used as a condenser and in which the outdoor heat exchanger **32** and the respective freezer heat exchangers **84** are used as evaporators.

When a heating capacity becomes excessive in the operation of using the outdoor heat exchanger **32** as an evaporator, it is recommended to stop the second non-inverter compressor **31c** and to close the outdoor expansion valve **34** in the state shown in Fig. **19** and to perform the heating operation in a state where the refrigerant absorbs heat in the respective freezer heat exchangers **84** and dissipates heat in the air-conditioning heat exchanger **62.**

Moreover, when the heating capacity still becomes excessive, it is recommended to perform the operation of using the outdoor heat exchanger **32** as an evaporator and dissipating the excessive heat to the outside of the room by switching the second four-way switching valve **36** to the second state and by switching the outdoor expansion valve **34** to a fully opened state (at this time, by stopping the second non-inverter compressor **31c).**

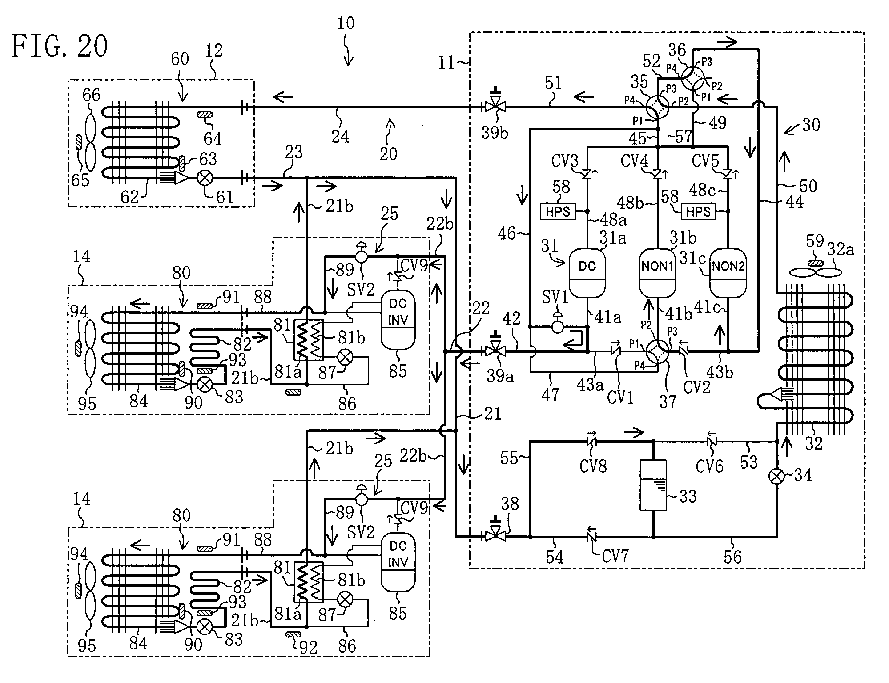

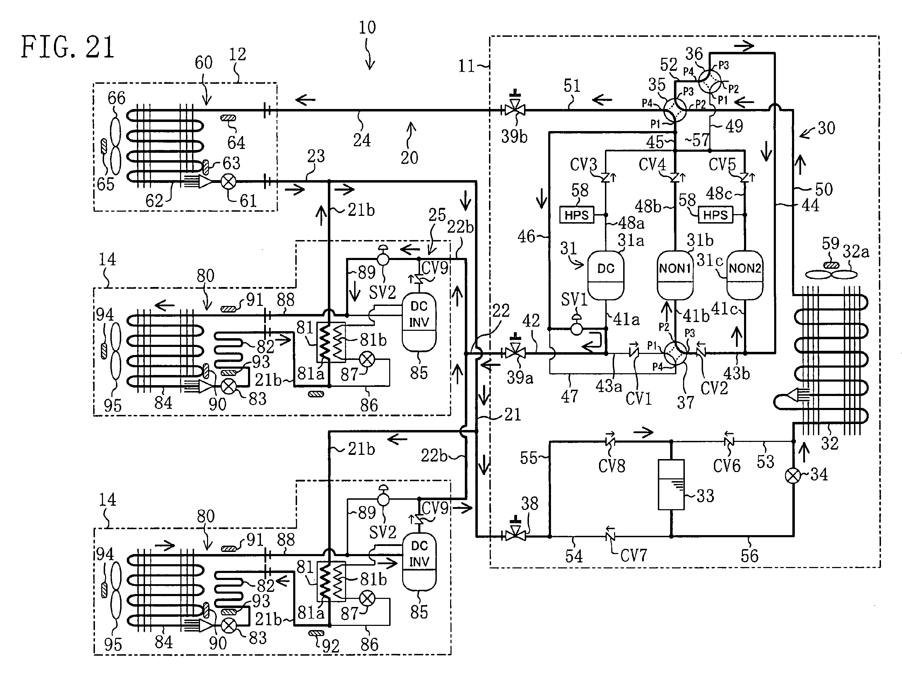

As for the defrosting operation at the time of the heating operation, the defrosting operation shown in Fig. **20** in which two freezer heat exchangers **84** are defrosted at the same time and the defrosting operation shown in Fig. **21** in which one freezer heat exchanger **84** is defrosted while the other freezer heat exchanger **84** performs the refrigerating operation can be performed.

At the time of the defrosting operation shown in Fig. **20****,** the first four-way switching valve **35** and the third four-way switching valve **37** are set to the second state and the second four-way switching valve **36** is set to the first state. Moreover, the air-conditioning expansion valve **61** and the respective freezer expansion valves **83** are fully opened, whereas the outdoor expansion valve **34** has its degree of opening suitably adjusted. The first solenoid valve **SV1** of the high stage side hot gas passage **46** and the second solenoid valves **SV2** of the respective low stage side hot gas passages **89** are opened. In this state, the first non-inverter compressor **31b** and the second non-inverter compressor **31c** are operated.

The refrigerant circulates through the refrigerant circuit **10** in the same state as shown in Fig. **6** except that part of the refrigerant discharged from the compression mechanism **31** of the outdoor unit **10** flows through the high stage side hot gas passage **46** and the first low-pressure gas pipe **42** and then is distributed to two freezer side branch gas pipes 22b and that the distributed refrigerants flow to the respective freezer showcases **14.** A refrigeration cycle is performed in which the air-conditioning heat exchanger **62** and the respective freezer heat exchangers **84** are used as condensers and in which the outdoor heat exchanger **32** is used as an evaporator.

The defrosting operation shown in Fig. **21** is an embodiment in which the freezer showcase **14** shown on the upper side in the drawing performs the defrosting operation. At the time of this defrosting operation, the first four-way switching valve **35** and the third four-way switching valve **37** are set to the second state and the second four-way switching valve **36** is set to the first state. Moreover, the freezer expansion valve **83** of the refrigerating side showcase and the outdoor expansion valve **34** have their degrees of opening suitably adjusted, whereas the air-conditioning expansion valve **61** and the freezer expansion valve **83** of the defrosting side showcase are fully opened. The first solenoid valve **SV1** of the high stage side hot gas passage **46** is opened and the second solenoid valve **SV2** of the low stage side hot gas passage **89** of the defrosting side showcase is opened, whereas the second solenoid valve **SV2** of the low stage side hot gas passage **89** of the refrigerating side showcase is closed. In this state, the first non-inverter compressor **31b,** the second non-inverter compressor **31c,** and the booster compressor **85** of the cooling side showcase are operated.

The refrigerant circulates through the refrigerant circuit **10** in the same state as shown in Fig. **7** except that part of the refrigerant discharged from the compression mechanism **31** of the outdoor unit **10** flows through the high stage side hot gas passage **46** and the first low-pressure gas pipe **42** to the freezer heat exchanger **84** of the defrosting side showcase. A refrigeration cycle is performed in which the air-conditioning heat exchanger **62** and the freezer heat exchanger **84** of the defrosting side showcase are used as condensers and in which the freezer heat exchanger **84** of the refrigerating side showcase and the outdoor heat exchanger **32** are used as evaporators.

### - Effect of Embodiment 3 -

The refrigeration system **10** of this embodiment 3, just as with the embodiments 1 and 2, can respond to a variety of patterns of the defrosting operations while preventing the construction of the refrigeration system from becoming complex. In particular, even when any one of the two freezer heat exchangers **84** is defrosted, the other freezer heat exchangers **84** can perform the refrigerating operation. Moreover, this embodiment 3 is the same as the embodiments 1 and 2 also in that there is not a restriction in design such that it is necessary to bring heat absorption and heat dissipation in the chiller heat exchanger and the freezer heat exchanger into a good balance at the time of the defrosting operation.

Furthermore, this embodiment 3 is the same as the embodiments 1 and 2 also: in that the freezer heat exchangers **84** can be defrosted by the use of the heat absorbed by the air-conditioning heat exchanger **62** and the outdoor heat exchanger **32** and the heat produced by compressing the refrigerant by the compression mechanism **31,** so the defrosting operation can be performed efficiently; and in that the frosts adhering to the freezer heat exchangers **84** can be melted from inside by the heat of the refrigerant without using an electric heater, which can prevent an increase of the temperature in the chiller showcase **13** and the freezer showcase **14.**

### <<Embodiment 4 of the Invention>>

A refrigeration system **10** of an embodiment 4 is basically equivalent to that of the embodiment 1 in the construction of the refrigerant circuit **20,** but is different from that of the embodiment 1 in the defrosting operation.

In this embodiment, in the period during which the freezer heat exchanger **84** is defrosted, the refrigerant discharged from the compression mechanism **31** of the outdoor circuit **30** is further compressed by the booster compressor **85** and then the discharged refrigerant is supplied to the freezer heat exchanger **84.** Specifically, part of the refrigerant discharged from the compression mechanism **31** of the outdoor circuit **30** passes through the low stage side hot gas passage **89** and is supplied to the freezer heat exchanger **84** and the other part of the refrigerant is compressed by the booster compressor **85** and then is merged with the refrigerant flowing through the low stage side hot gas passage **89** from the compression mechanism **31** and the refrigerant after merging is supplied to the freezer heat exchanger **84.**

During this defrosting operation, part of the refrigerant condensed by the freezer heat exchanger **84** is supplied for the liquid injection into the booster compressor **85.**

In this embodiment 4, it is assumed to think that the hot gas introduction passage **46, 89** is divided into a first introduction passage **96** for introducing the refrigerant discharged from the compression mechanism **31** of the outdoor circuit **30** into the booster compressor **85** and a second introduction passage **97** for introducing the refrigerant discharged from the booster compressor **85** into the freezer heat exchanger **84.** The second introduction passage **97** is connected to the compression mechanism **31** of the outdoor circuit **30** and the freezer heat exchanger **84** (the second introduction passage **97** is a passage including the low stage side hot gas passage **89).** On the other hand, the first introduction passage **96** is branched from second introduction passage **97** and is connected to the booster compressor **85** so as to introduce part of the refrigerant discharged from the compression mechanism **31** of the outdoor circuit **30** into the booster compressor **85.** Moreover, the discharge pipe **98** of the booster compressor **85** is connected to the compression mechanism **31** side of the outdoor circuit **30** in the second introduction passage **97.**

In this embodiment 4, the branch pipe **86** connected to the low-pressure side passage **81b** of the refrigerant heat exchanger **81** constructs a liquid injection passage **99** for introducing part of the liquid refrigerant flowing out of the freezer heat exchanger **84** to the booster compressor **85** in the period during which the freezer heat exchanger **84** is defrosted.

### - Operation -

As for the operation of the embodiment 4, the defrosting operation of the freezer heat exchanger **84** at the time of the cooling operation will be described.

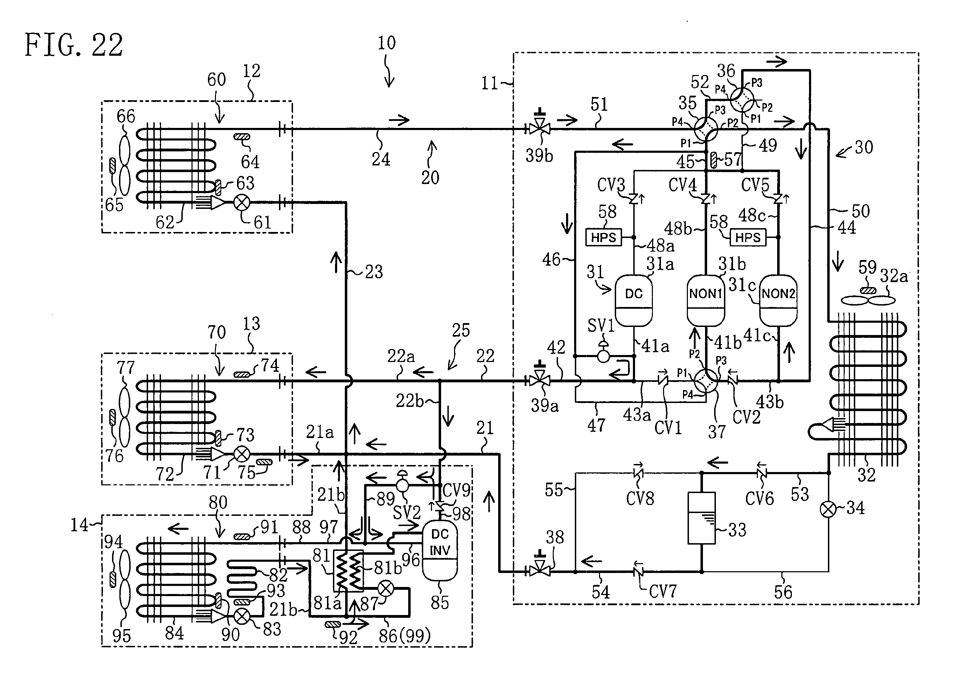

The refrigeration system **10** of the embodiment 4 switches between a defrosting operation (first defrosting operation) shown in Fig. **3** of the embodiment 1 and a defrosting operation (second defrosting operation) shown in Fig. **22****,** which will be described later. These two defrosting operations are switched according to the detection temperature of the heat exchanger temperature sensor **90** disposed in the freezer heat exchanger **84.**

In this refrigeration system **10,** usually, the first defrosting operation shown in Fig. **3** is performed. In the first defrosting operation, as described above, the first non-inverter compressor **31b** and the second non-inverter compressor **31c** of the outdoor circuit **30** are operated, whereas the DC inverter compressor **31a** and the booster compressor **85** are bought into a stop state and both of the chiller heat exchanger **72** and the freezer heat exchanger **84** are defrosted.

On the other hand, when the defrosting capacity of the freezer heat exchanger **84** is not sufficient in the first defrosting operation and hence the time required to defrost the freezer heat exchanger **84** becomes long, the following second defrosting operation is performed.

Specifically, when it takes a lot of time for the detection temperature of the heat exchanger temperature sensor **90** to be raised to a specified temperature in the first defrosting operation, it is determined that the defrosting capacity of the freezer heat exchanger **84** is not sufficient. As a result, the first defrosting operation is shifted to the second defrosting operation.

In this second defrosting operation, just as with the first defrosting operation, in the refrigerant circuit **20,** the first four-way switching valve **35** and the second four-way switching valve **36** are set to the first state and the third four-way switching valve **37** is set to the second state. Moreover, the outdoor expansion valve **34** is totally closed and the chiller expansion valve **71** and the freezer expansion valve **83** are fully opened, whereas the air-conditioning expansion valve **61** has its degree of opening suitably adjusted. The first solenoid valve **SV1** of the high stage side hot gas passage **46** and the second solenoid valve **SV2** of the low stage side hot gas passage **89** are opened. In this state, the first non-inverter compressor **31b** and the second non-inverter compressor **31c** are operated. Moreover, the electronic expansion valve **87** of the branch pipe **86** as the liquid injection passage **99** has the degree of opening suitably adjusted and the booster compressor **85** is actuated.

The refrigerant discharged in this state from the first non-inverter compressor **31b** and the refrigerant discharged from the second non-inverter compressor **31c** pass through the respective discharge pipes **48b, 48c** and merge with each other in the high-pressure pipe **45.** The refrigerant after merging passes through the first four-way switching valve **35** and the first gas pipe **50** and is sent to the outdoor heat exchanger **32.** In the outdoor heat exchanger **32,** the refrigerant dissipates heat to the outdoor air, thereby being condensed. The refrigerant condensed in the outdoor heat exchanger **32** passes through the receiver **33** and flows through the first liquid side connection piping **21** and then flows into the second liquid side connection piping **23.**

On the other hand, part of the refrigerant discharged from the first non-inverter compressor **31b** and the second non-inverter compressor **31c** flows through the high stage side hot gas passage **46,** the first low-pressure gas pipe **42,** and the first gas side connection piping **22** and then is distributed to the chiller side branch gas pipe **22a** and the freezer side branch gas pipe **22b.**

The refrigerant flowing through the chiller side branch gas pipe **22a** flows into the chiller heat exchanger **72** and there dissipates heat to the air in the chiller showcase **13,** thereby being condensed. At that time, frost adhering to the chiller heat exchanger **72** is melted. The refrigerant condensed in the chiller heat exchanger **72** passes through the chiller expansion valve **71** and flows through the chiller side branch liquid pipe **21a** and then flows into the second liquid side connection piping **23** and then merges with the refrigerant from the outdoor unit **11.**

The refrigerant flowing through the freezer side branch gas pipe **22b** passes through the second introduction passage **97** including the low stage side hot gas passage **89** and part of the refrigerant flows into the freezer heat exchanger **84** and the other part of the refrigerant passes through the first introduction passage **96** and is sucked by the booster compressor **85.**

The refrigerant compressed by the booster compressor **85** flows through the discharge pipe **98** and is sent to the low stage side hot gas passage **89** and then is merged with the refrigerant discharged from the compressor **31** of the outdoor circuit **30.** Then, the refrigerant merged in the low stage side hot gas passage **89** flows into the freezer heat exchanger **84.** In other words, in the freezer circuit **80,** part of the refrigerant is compressed and circulated by the booster compressor **85** and the input heat of the booster compressor **85** is given to the refrigerant.

In the freezer heat exchanger **84,** the refrigerant dissipates heat to the air in the freezer showcase **14,** thereby being condensed. At that time, frost adhering to the freezer heat exchanger **84** is melted. The refrigerant condensed in the freezer heat exchanger **84** passes through the freezer expansion valve **83,** the drain pan heater **82,** and the refrigerant heat exchanger **81** and then flows through the freezer side branch liquid pipe **21b** and then flows into the second liquid side connection piping **23** and then merges with the refrigerant from the outdoor unit **11.**

At the time of this second defrosting operation, part of the refrigerant compressed by the compression mechanism **31** of the outdoor circuit **30** is further compressed by the booster compressor **85,** so when this operation is continued, there is a possibility that the temperature of the refrigerant discharged from the booster compressor **85** is remarkably increased to cause the failure of the booster compressor **85.** For this reason, in the refrigeration system **10** of the embodiment 4, to prevent the failure of the booster compressor **85,** the operation of injecting liquid is performed.

Specifically, at the time of the second defrosting operation, the degree of opening of the electronic expansion valve **87** is adjusted according to the temperature of the refrigerant discharged from the booster compressor **85.** For example, when the temperature of the refrigerant discharged from the booster compressor **85** is higher than a specified temperature, the degree of opening of the electronic expansion valve **87** is made larger. As a result, part of the refrigerant condensed by the freezer heat exchanger **84** is passed through the branch pipe **86** of the liquid injection passage **99** and is sent to the booster compressor **85.** For this reason, the refrigerant sucked into the booster compressor **85** is refrigerated. Thus, this can prevent the temperature of the refrigerant discharged from the booster compressor **85** from being abnormally increased.

On the other hand, the refrigerants merged with each other in the second liquid side connection piping **23** are supplied to the air-conditioning circuit **60.** Subsequent operations are the same as in the embodiment shown in Fig. **3****.** In other words, when the refrigerant flowing into the air-conditioning circuit **60** passes through the air-conditioning expansion valve **61,** the refrigerant has its pressure reduced and then is introduced into the air-conditioning heat exchanger **62.** In the air-conditioning heat exchanger **62,** the refrigerant absorbs heat from the indoor air, thereby being evaporated. In the air-conditioning unit **12,** the indoor air refrigerated by the air-conditioning heat exchanger **62** is supplied into the store. The refrigerant evaporated in the air-conditioning heat exchanger **62** passes through the second gas side connection piping **24** and flows into the outdoor circuit **30** and then passes through the second gas pipe **51,** the first four-way switching valve **35,** and the second four-way switching valve **36** in sequence, and then passes through the second low-pressure gas pipe **44,** the second suction pipe **41b,** and the third suction pipe **41c,** and then is sucked by the first non-inverter compressor **31b** and the second non-inverter compressor **31c.** The first non-inverter compressor **31b** and the second non-inverter compressor **31c** compress the sucked refrigerant and discharge the compressed refrigerant into the second discharge pipe **48b** and the third discharge pipe **48c.**

As described above, in the defrosting operation shown in Fig. **22****,** the chiller heat exchanger **72** and the freezer heat exchanger **84** can be defrosted at the same time by the use of heat absorbed by the indoor heat exchanger **62** and heat produced by compressing the refrigerant by the first and second non-inverter compressors **31b, 31c** of the outdoor circuit **30** and the booster compressor **85** of the freezer circuit **80.** Moreover, the same operation as shown in Fig. **4** can be also performed and the operation can be also performed in which only the freezer heat exchanger **84** is defrosted by closing the chiller expansion valve **71.**

In this regard, the defrosting operation of the freezer heat exchanger **84** at the time of the heating operation will be omitted.

### - Effect of Embodiment 4 -

In this embodiment 4, in addition to the same effect as in the embodiment 1, the following effect can be produced.

That is, this embodiment 4 can switch the first defrosting operation and the second defrosting operation and when the defrosting capacity of the freezer heat exchanger **84** is not sufficient in the first defrosting operation, the second defrosting operation of operating also the booster compressor **85** is operated. For this reason, according to the embodiment 4, heat to be given to the refrigerant by the second defrosting operation can be increased and hence the defrosting capacity of the freezer heat exchanger **84** can be increased. Thus, the freezer heat exchanger **84** can be effectively defrosted by the second defrosting operation.

Moreover, in the embodiment 4, an abnormal increase in the temperature of the refrigerant discharged from the booster compressor **85** can be prevented by injecting liquid into the booster compressor **85** during the second defrosting operation, so the booster compressor **85** can be protected with reliability.

### - Modification of Embodiment 4 -

In the embodiment 4, the branch pipe **86** of the liquid injection passage **99** is connected to the intermediate-pressure position of the booster compressor **85,** but this branch pipe **86** may be connected to the first introduction passage **96** of the suction pipe of the booster compressor **85.**

Moreover, in the embodiment 4, an abnormal increase in the temperature of the refrigerant discharged from the booster compressor **85** can be prevented by injecting the liquid into the booster compressor **85,** but the operating capacity of the booster compressor **85** may be controlled in place of injecting the liquid. This can also prevent an abnormal increase in the temperature of the refrigerant discharged from the booster compressor **85.**

### <<Embodiment 5 of the Invention>>

A refrigeration system **10** of an embodiment 5 is an embodiment that is different from the refrigeration system **10** of the embodiment 1 in a part of the construction of the refrigerant circuit **20** and also in the construction of the hot gas introduction passages **100, 102.** The points in which this embodiment 5 is different from the embodiment 1 will be mainly described below. Here, in this embodiment 5, the sensors are omitted in the drawing.

In this embodiment 5, the high-pressure introduction pipe **47** shown in Fig. **1** is not shown in the outdoor unit **11,** but the high-pressure introduction pipe **47** is provided, just as with the embodiment 1, to introduce the high pressure of the refrigerant circuit **20** into the fourth port **P4** of the third four-way switching valve **37.**

In the freezer showcase **14,** the refrigerant heat exchanger **81** is not provided but the gas side piping **110 (88)** of the freezer heat exchanger **84** is connected to the suction side of the booster compressor **85.** An oil separator **120** is disposed in the discharge pipe **98** of the booster compressor 85 and an oil return pipe **122** having a capillary tube **121** is connected between the oil separator **120** and the suction pipe **111** of the booster compressor **85.** Moreover, a bypass piping **125** bypassing the booster compressor **85** when the booster compressor **85** fails is connected to the suction pipe **111** and the discharge pipe **98** of the booster compressor **85.** This bypass piping **125** has a check valve **CV10** disposed therein.

As for a feature of this embodiment 5, unlike the embodiment 1, the hot gas introduction passage **100** is not disposed individually on the higher stage side and the lower stage side but is constructed of one piping connected to the discharge line (high-pressure gas pipe) **45** of the compression mechanism **31** of the outdoor unit **11** and to the gas side piping **110** of the freezer heat exchanger **84.** This hot gas introduction passage **100** has an electronic expansion valve **101** disposed therein as a flow control mechanism.

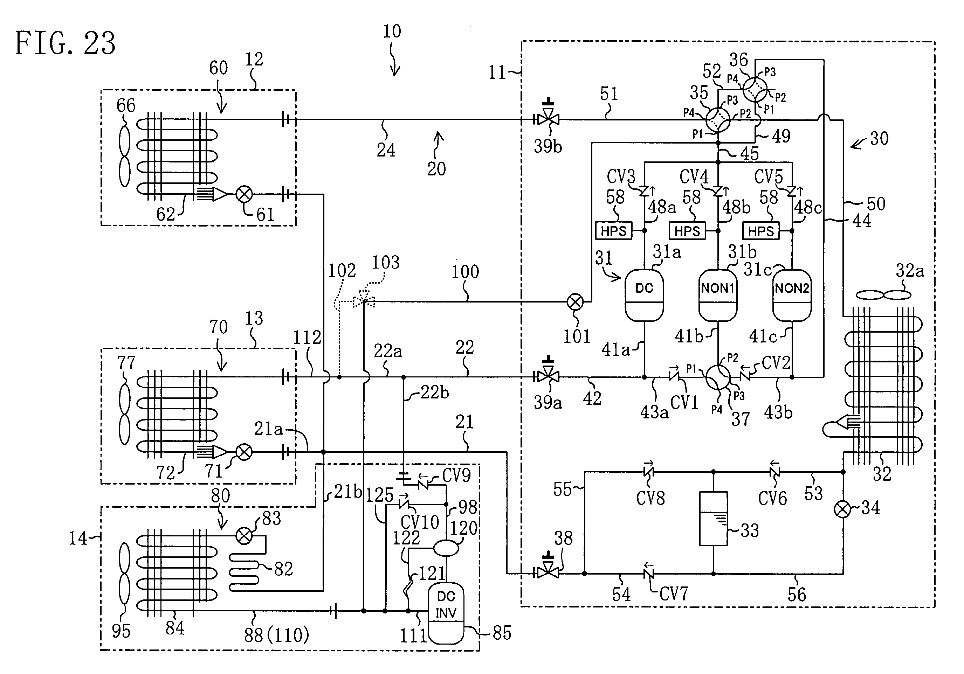

Moreover, it is also recommended to connect the hot gas introduction passage **100** not only to the freezer heat exchanger **84** but also, as shown by a broken line in Fig. **23****,** to the gas side piping **112** of the chiller heat exchanger **72** by a branch pipe (hot gas introduction passage) **102** disposed in the hot gas introduction passage **100** and to provide a switching mechanism **103** such as a three-way valve capable of switching or selecting a hot gas flow to the freezer heat exchanger **84** and a hot gas flow to the chiller heat exchanger **72.** With this, both of the chiller heat exchanger **72** and the freezer heat exchanger **84** can be defrosted at the same time or only one of them can be defrosted. Thus, just as with the respective embodiments, this embodiment 5 can defrost the respective heat exchangers **72, 84** individually and hence can respond to a variety of patterns of defrosting operations.

For example, when the freezer heat exchanger **84** is defrosted, part of the refrigerant discharged from the compression mechanism **31** of the outdoor unit **11** flows through the hot gas introduction passage **100** and is introduced into the freezer heat exchanger **84.** In the freezer heat exchanger **84,** the frost adhering to the freezer heat exchanger **84** is melted by the heat of the high-pressure refrigerant. The refrigerant is evaporated in the chiller heat exchanger **72,** the air-conditioning heat exchanger **62,** or the outdoor heat exchanger **32** and then is sucked by the compressor mechanism **31.** At that time, when the electronic expansion valve **101** is fully opened, the flow of refrigerant is large, so it can be thought that the frost adhering to the freezer heat exchanger **84** is melted around a coil at a stretch, whereby the blocks of the frost not melted around the coil will be dropped from the coil on goods for sale. However, when the flow of the refrigerant is controlled by adjusting the degree of opening of the electronic expansion valve **101,** it is possible to melt the frost slowly around the coil and hence to prevent the frost from dropping on the goods for sale.

The operation at the time of the cooling operation and the heating operation in this embodiment is nearly the same as those in the respective embodiments described above and hence the description of the operation will be omitted here.

### <<Other Embodiments>>

The above-mentioned embodiments may be constructed in the following manner.

For example, in the embodiments 1 and 2, an example has been described in which one air-conditioning unit **12,** one chiller showcase **13,** and one freezer showcase **14** are connected, but the numbers of the air-conditioning unit **12,** the chiller showcase **13,** and the freezer showcase **14** may be changed as appropriate.

Moreover, in the embodiment 3, an example has been described in which one air-conditioning unit **12** and two freezer showcases **14** are connected to the outdoor unit **11,** but three or more freezer showcases **14** may be connected.

Moreover, in any one of the embodiments 1 to 3, when the store is air-conditioned by a dedicated air-conditioner, the refrigeration system **10** of each embodiment does not need to be provided with the air-conditioning unit **12.**

Further, while the compression mechanism **31** of the outdoor unit **11** is constructed of three compressors **31a, 31b,** and **31c** in the respective embodiments, the number of compressors may be changed and when the air-conditioning unit **12** is not provided, the number of compressor may be one.

Still further, the embodiment 4 is an embodiment in which the effect of the defrosting operation is enhanced by utilizing the booster compressor **85** at the time of defrosting the freezer heat exchanger **84** in the embodiment 1. The same idea can be applied also to the embodiment 2 and the embodiment 3. Still further, in the embodiment 4, at the time of the second defrosting operation, the refrigerant discharged from the compressor mechanism **31** of the outdoor unit **11** is circulated while part of the refrigerant is supplied to the freezer heat exchanger **84** and while the other part of the refrigerant is supplied to the booster compressor **85.** However, the entire refrigerant discharged from the compressor mechanism **31** may be supplied to and compressed by the booster compressor **85** and then be supplied to the freezer heat exchanger **84.**

The above-mentioned embodiments have been described by way of essentially preferable examples and do not intend to limit the present invention, its applications, or the scope of its usage.

### INDUSTRIAL APPLICABILITY

As described above, the present invention is useful for a refrigeration system having a refrigerant circuit of a vapor compression type refrigeration cycle of the construction in which plural lines of refrigeration circuits each having a refrigeration heat exchanger are connected to an outdoor circuit provided with an outdoor heat exchanger and a compression mechanism and in which an auxiliary compressor is connected in series to the refrigeration heat exchanger in at least one line of refrigeration circuit.

## Claims

1. A refrigeration system having a refrigerant circuit **(20)** that is constructed in such a way that a plurality of lines of refrigeration circuits **(70, 80)** having refrigeration heat exchangers **(72, 84)** respectively are connected to an outdoor circuit **(30)** provided with an outdoor heat exchanger **(32)** and a compression mechanism **(31)** and conducts a vapor compression type refrigeration cycle, at least one of the lines of refrigeration circuits **(80)** having an auxiliary compressor **(85)** connected in series to the refrigeration heat exchanger **(84),** the refrigeration system comprising:
a hot gas introduction passage **(46, 89), (100, 102)** for selectively introducing gas refrigerant discharged from the compression mechanism **(31)** of the outdoor circuit **(30)** into at least one of the plurality of refrigeration heat exchangers **(72, 84);** and
a defrosting path **(25)** capable of performing a defrosting operation of conducting a refrigeration cycle by using that refrigeration heat exchanger **(72, 84)** as a condenser.

2. The refrigeration system according to claim 1, wherein the outdoor circuit **(30)** has a first refrigeration circuit **(70)** and a second refrigeration circuit **(80)** connected thereto in parallel, the first refrigeration circuit **(70)** having a first refrigeration heat exchanger **(72),** the second refrigeration circuit **(80)** having a second refrigeration heat exchanger **(84)** and the auxiliary compressor **(85).**

3. The refrigeration system according to claim 1, wherein the outdoor circuit **(30)** has a plurality of refrigeration circuits **(80)** connected thereto in parallel, each of the plurality of refrigeration circuits **(80)** having the refrigeration heat exchanger **(84)** and the auxiliary compressor **(85).**

4. The refrigeration system according to claim 1, wherein:
the outdoor circuit **(30)** has an air heat exchanger circuit **(60)** connected thereto, the air heat exchanger circuit **(60)** having an air heat exchanger **(62)** for adjusting temperature of air; and
a first defrosting operation and a second defrosting operation can be performed, the first defrosting operation using the refrigeration heat exchangers **(72, 84)** as condensers and using the air heat exchanger **(62)** as an evaporator, the second defrosting operation using the refrigeration heat exchangers **(72, 84)** as condensers and using the outdoor heat exchanger **(32)** as an evaporator.

5. The refrigeration system according to claim 1, wherein the hot gas introduction passage **(46, 89)** has a high stage side hot gas passage **(46)** and a low stage side hot gas passage **(89),** the high stage side hot gas passage **(46)** being connected to a discharge line **(45)** of the compression mechanism **(31)** of the outdoor circuit **(30)** and to a base pipe **(42)** of a low-pressure gas line of the respective refrigeration circuits **(70, 80)** and allowing a refrigerant flow to the respective refrigeration heat exchangers **(72, 84)** from the discharge line **(45)** of the compression mechanism **(31)** at a time of a defrosting operation, the low stage side hot gas passage **(89)** being connected to a discharge line **(22b)** and a suction line **(88)** of the auxiliary compressor **(85)** and allowing a refrigerant flow to the refrigeration heat exchanger **(84)** connected to the auxiliary compressor **(85)** from the discharge line **(22b)** of the auxiliary compressor **(85)** at the time of the defrosting operation.

6. The refrigeration system according to claim 5, wherein:
the compression mechanism **(31)** of the outdoor circuit **(30)** includes: a first compressor **(31a),** a second compressor **(31b),** and a third compressor **(31c),** which are connected in parallel; a four-way switching valve **(37)** connected to an suction side of the compression mechanism **(31);** a high stage side opening/opening valve **(SV1)** disposed in the high stage side hot gas passage **(46);** and a low stage side opening/opening valve **(SV2)** disposed in the low stage side hot gas passage **(89),**
the first compressor **(31a)** having its suction pipe **(41a)** connected to a first port **(P1)** of the four-way switching valve **(37)** via a check valve **(CV1)** for prohibiting a refrigerant flow to the first compressor **(31a),**
the second compressor **(31b)** having its suction pipe **(41b)** connected to a second port **(P2)** of the four-way switching valve **(37),**
the third compressor **(31c)** having its suction pipe **(41c)** connected to a third port **(P3)** of the four-way switching valve **(37)** via a check valve **(CV2)** for prohibiting a refrigerant flow to the third compressor **(31c),**
the compression mechanism **(31)** having its high-pressure introduction pipe **(47)** communicating with a high pressure line connected to a fourth port **(P4)** of the four-way switching valve **(37);**
the high stage side hot gas passage **(46)** is connected to the suction pipe **(41a)** of the first compressor **(31a);** and
the four-way switching valve **(37)** is constructed so as to be able to switch between a first state in which the first port **(P1)** communicates with the second port **(P2)** and in which the third port **(P3)** communicates with the fourth port **(P4)** and a second state in which the first port **(P1)** communicates with the fourth port **(P4)** and in which the second port **(P2)** communicates with the third port **(P3).**

7. The refrigeration system according to claim 5, wherein:
the compression mechanism **(31)** of the outdoor circuit **(30)** includes: a first compressor **(31a)**, a second compressor **(31b),** and a third compressor **(31c),** which are connected in parallel; a four-way switching valve **(37)** connected to a suction side of the compression mechanism **(31);** and a low stage side opening/opening valve **(SV2)** disposed in the low stage side hot gas passage **(89),**
the first compressor **(31a)** having its suction pipe **41a** connected to a first port **(P1)** of the four-way switching valve **(37),**
the second compressor **(31b)** having its suction pipe **(41b)** connected to a second port **(P2)** of the four-way switching valve **(37),**
the third compressor **(31c)** having its suction pipe **(41c)** connected to a third port **(P3)** of the four-way switching valve **(37)** via a check valve **(CV2)** for prohibiting a refrigerant flow to the third compressor **(31c);**
the high stage side hot gas passage **(46)** is connected to a fourth port **(P4)** of the four-way switching valve **(37);** and
the four-way switching valve **(37)** is constructed so as to be able to switch between a first state in which the first port **(P1)** communicates with the fourth port **(P4)** and in which the second port **(P2)** communicates with the third port **(P3)** and a second state in which the first port **(P1)** communicates with the second port **(P2)** and in which the third port **(P3)** communicates with the fourth port **(P4).**

8. The refrigeration system according to claim 1, wherein the hot gas passage **(46, 89)** includes a first introduction passage **(96)** and a second introduction passage **(97),** the first introduction passage **(96)** introducing gas refrigerant discharged from the compression mechanism **(31)** of the outdoor circuit **(30)** into the auxiliary compressor **(85),** the second introduction passage **(97)** introducing gas refrigerant discharged from the auxiliary compressor **(85)** into the refrigeration heat exchanger **(84).**

9. The refrigeration system according to claim 8, wherein:
the second introduction passage **(97)** is connected to the compression mechanism **(31)** of the outdoor circuit **(30)** and to the refrigeration heat exchanger **(84);**
the first introduction passage **(96)** is branched from the second introduction passage **(97)** and is connected to the auxiliary compressor **(85)** so as to introduce part of gas refrigerant discharged from the compression mechanism **(31)** of the outdoor circuit **(30)** into the auxiliary compressor **85;** and
the second introduction passage **(97)** has a discharge pipe **(98)** of the auxiliary compressor **(85)** connected to its portion closer to the compression mechanism **(31)** of the outdoor circuit **(30).**

10. The refrigeration system according to claim 9, comprising a liquid injection passage **(99)** for introducing part of liquid refrigerant flowing out of the refrigeration heat exchanger **(84)** into the auxiliary compressor **(85).**

11. The refrigeration system according to claim 9, wherein the auxiliary compressor (85) is constructed of a variable displacement compressor.

12. The refrigeration system according to claim 1, wherein the hot gas introduction passage **(100, 102)** is directly connected to a discharge line **(45)** of the compression mechanism **(31)** of the outdoor circuit **(30)** and to at least one of gas side piping **(110, 112)** of the refrigeration heat exchangers **(72, 84).**

13. The refrigeration system according to claim 12, wherein the hot gas introduction passage **(100, 102)** is connected to the discharge line **(45)** of the compression mechanism **(31)** of the outdoor circuit **(30)** and to the gas side piping **(110, 112)** of the plurality of refrigeration heat exchangers **(72, 84)** and is provided with a switching mechanism **(103)** capable of switching or selecting the plurality of refrigeration heat exchangers **(72, 84).**

14. The refrigeration system according to claim 12, wherein the hot gas introduction passage **(100, 102)** is provided with a flow control mechanism **(101).**
